(19) Europäisches Patentamt / European Patent Office / Office européen des brevets

(11) **EP 3 419 184 B1**

(12) **EUROPEAN PATENT SPECIFICATION**

| | |
|---|---|
| (45) Date of publication and mention of the grant of the patent:<br>**12.08.2020 Bulletin 2020/33** | (51) Int Cl.:<br>***H04B 1/04*** *(2006.01)*  ***H04B 1/30*** *(2006.01)*<br>***H04L 27/36*** *(2006.01)* |
| (21) Application number: **16917183.2** | (86) International application number:<br>**PCT/CN2016/100790** |
| (22) Date of filing: **29.09.2016** | (87) International publication number:<br>**WO 2018/058429 (05.04.2018 Gazette 2018/14)** |

(54) **MICROWAVE TRANSMITTER AND METHOD FOR ADJUSTING SIGNAL**

MIKROWELLENSENDER UND VERFAHREN ZUR SIGNALEINSTELLUNG

ÉMETTEUR HYPERFRÉQUENCE ET PROCÉDÉ DE RÉGLAGE DE SIGNAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.12.2018 Bulletin 2018/52**

(73) Proprietor: **Huawei Technologies Co., Ltd.**
**Longgang District**
**Shenzhen, Guangdong 518129 (CN)**

(72) Inventor: **LYU, Rui**
**Shenzhen**
**Guangdong 518129 (CN)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
| | |
|---|---|
| **CN-A- 1 392 691** | **CN-A- 102 437 983** |
| **CN-A- 102 437 983** | **CN-A- 103 534 937** |
| **CN-U- 202 231 740** | **US-A1- 2004 032 913** |
| **US-B1- 7 382 833** | |

**Description**

**TECHNICAL FIELD**

The present invention relates to the field of communications technologies, and in particular, to a microwave transmitter and a signal adjustment method.

**BACKGROUND**

In wireless communication, a microwave transmitter may transmit a plurality of signals at the same time. All components that are of the microwave transmitter and through which each signal passes during transmission may form a transmit channel corresponding to the signal. Each signal is corresponding to one signal processing module, and the signal processing module includes components such as a modulator, a frequency mixer, a filter, and a power amplifier. Each signal is an I/Q (IN-Phase/Quadrature, in-phase/quadrature) signal, direct current components of two quadrature signals of the I/Q signal are the same, a phase difference between the two quadrature signals is 90 degrees, and gains of the two quadrature signals are balanced (gains are equal). However, after the I/Q signal passes through a signal processing module, imbalance impairments are caused (the gains of the two quadrature signals are unbalanced, the phase difference between the two quadrature signals are not equal to 90 degrees, and the direct current components of the two quadrature signals are not equal). Reasons for the imbalance impairments of the I/Q signal may include the following three types: a phase shifter in the modulator makes the phase difference of the I/Q signal not equal to 90 degrees, an individual cause of a component through which each signal passes makes the gains of the two quadrature signals of the I/Q signal unbalanced, and a local-frequency signal spilled over from the frequency mixer separately adds different direct current components to the two quadrature signals of the I/Q signal. In addition, delays of various components through which each signal passes cause a rotation phase deviation to the I/Q signal.

In the prior art, to correct an imbalance impairment of an I/Q signal, a skilled person disposes an imbalance adjustment apparatus for each I/Q signal. The imbalance adjustment apparatus includes a correction module, an envelope detector, and an estimation module. The correction module is electrically connected to a signal processing module, the envelope detector is electrically connected to the signal processing module, and the estimation module is electrically connected to the correction module. Each I/Q signal transmitted by the microwave transmitter is split into two same I/Q signals, one I/Q signal is transmitted to the correction module, and the other I/Q signal is transmitted to the estimation module. In this case, the correction module transmits the received I/Q signal to the signal processing module (the correction module is not in a working state in this case). After passing through the signal processing module, the I/Q signal is transmitted to the envelope detector. The envelope detector detects an amplitude curve (an envelope of the I/Q signal) of the I/Q signal that is output after the I/Q signal passes through the signal processing module, and transmits the detected amplitude curve of the I/Q signal to the estimation module. The estimation module estimates a balance adjustment parameter of the I/Q signal based on the received amplitude curve of the I/Q signal and an initially received I/Q signal, and sends the balance adjustment parameter to the correction module. In this case, the correction module starts to work, and the correction module may adjust the received I/Q signal based on the balance adjustment parameter, and send the adjusted I/Q signal to the signal processing module for processing. In this way, the I/Q signal output by the microwave transmitter has no imbalance impairment.

During implementation of the present invention, the prior art has the following disadvantages:

In the microwave transmitter, an imbalance adjustment apparatus is disposed for each I/Q signal, and each imbalance adjustment apparatus includes an estimation module and an envelope detector. If the microwave transmitter needs to send a plurality of I/Q signals at the same time, a plurality of estimation modules and a plurality of envelope detectors need to be disposed. Consequently, a structure of the microwave transmitter is relatively complex.

In the published patent prior art, the following documents relate to the technological background of the present invention:

D1   US 2004/032913 A1 (DINUR NATI [IL]) 19 February 2004 (2004-02-19)
D2   US 7 382 833 B1 (PETERSON MAURICE W [US] ET AL) 3 June 2008 (2008-06-03)
D3   CN 102 437 983 A (ANHUI FIRSTECH CO LTD) 2 May 2012 (2012-05-02)

Document D1 discloses a microwave transmitter, wherein the microwave transmitter comprises a power detector, a controller, one correction module and one signal processing module. The correction module, controlled by the controller, performs signal adjustment based on a parameter value sent by the controller and the adjustment parameter comprises at least a balance adjustment parameter to correct unbalance errors in an I/Q signal. Documents D2 and D3 disclose similar microwave transmitters.

## SUMMARY

The object of the present invention is to resolve these unbalance adjustment problems in the prior art and provide a microwave transmitter and a signal adjustment method which can perform with low complexity accurate and efficient unbalance compensation for a plurality of I/Q channels in a microwave transmitter. The technical solutions for this object are stated in a microwave transmitter of claim 1 and a method of claim 9. Further advantageous embodiments and improvements of the invention are listed in the dependent claims. The technical solutions of claim 1 and claim 9 can be summarized as follows:

According to a first aspect, a signal adjustment method is provided. The method is applied to a microwave transmitter, the microwave transmitter includes a power detector, a controller, at least two correction modules, and at least two signal processing modules, a signal input end of each signal processing module is electrically connected to a signal output end of one correction module, and the controller is separately electrically connected to a control end of each correction module and the power detector.

The method includes: sending, by the controller, different parameter values of an adjustment parameter to a target correction module, receiving power detection information that is corresponding to each parameter value and that is sent by the power detector, and determining an optimal parameter value corresponding to the target correction module from the parameter values based on the power detection information corresponding to each parameter value; sending, by the controller, the optimal parameter value to the target correction module; and performing, by the target correction module based on the optimal parameter value, signal adjustment on an input I/Q signal, where the received power detection information is power detection information of an I/Q signal output by a target signal processing module when the target correction module performs signal adjustment based on each parameter value sent by the controller, the target signal processing module is a signal processing module electrically connected to the target correction module, the adjustment parameter includes at least a balance adjustment parameter, and the target correction module is any one of the at least one correction module.

In the solution shown in this embodiment of the present invention, the adjustment parameter includes the balance adjustment parameter, the controller may determine one group of parameter values of the adjustment parameter that are to be sent to the target correction module, and then send the group of parameter values to the target correction module. The target correction module performs signal adjustment on the I/Q signal based on the parameter values of the adjustment parameter that are sent by the controller. The power detector may detect power detection information of the I/Q signal obtained after the signal adjustment, and send the power detection information to the controller. If the controller determines that the group of parameter values are not the optimal parameter value of the adjustment parameter, the controller may determine another group of parameter values of the adjustment parameter, and send the another group of parameter values of the adjustment parameter to the target correction module, until the controller determines the optimal parameter value of the adjustment parameter based on the power detection information.

In a possible implementation, when the controller sends the different parameter values of the adjustment parameter to the target correction module, if another correction module has obtained a corresponding optimal parameter value and is in a working state of performing, based on the optimal parameter value, signal adjustment on the input I/Q signal, the adjustment parameter further includes a first cross transfer parameter; and the receiving power detection information that is corresponding to each parameter value and that is sent by the power detector, and determining an optimal parameter value corresponding to the target correction module from the parameter values based on the power detection information corresponding to each parameter value includes: receiving combined power detection information that is corresponding to each parameter value and that is sent by the power detector, and determining the optimal parameter value from the parameter values based on the combined power detection information corresponding to each parameter value, where the combined power detection information corresponding to each parameter value is power detection information obtained after power detection information of an I/Q signal output, when the another correction module performs signal adjustment based on the corresponding optimal parameter value, by a signal processing module connected to the another correction module is added to power detection information of an I/Q signal output by the target signal processing module when the target correction module performs signal adjustment based on each parameter value.

In the solution shown in this embodiment of the present invention, the first cross transfer parameter is an I-signal to Q-signal scaling parameter. When the controller sends the different parameter values of the adjustment parameter to the target correction module, if the another correction module has obtained the corresponding optimal parameter value and is in a working state of performing, based on the optimal parameter value, signal adjustment on the input I/Q signal, the controller may determine that the target correction module is not a correction module in a first transmit channel in the microwave transmitter. When a correction module other than the correction module in the first transmit channel in the microwave transmitter performs rotation phase correction, the correction module calculates a relative rotation phase between an I/Q signal output by the correction module and an I/Q signal output by the first correction module, and further needs to correct the rotation phase. Therefore, the adjustment parameter further includes the first cross transfer parameter. In this way, when adjusting an imbalance impairment of the I/Q signal, the microwave transmitter may adjust a rotation phase impairment of the I/Q signal, so that imbalance impairment adjustment and rotation phase impairment adjustment for the I/Q signal do not interfere with each other.

The controller may send the different parameter values of the adjustment parameter (the balance adjustment parameter and the first cross transfer parameter) to the target correction module, receive the combined power detection information that is corresponding to each parameter value and that is sent by the power detector, and determine the optimal parameter value from the parameters based on the combined power detection information.

In a possible implementation, the balance adjustment parameter includes a direct current compensation parameter, a gain control parameter, and a second cross transfer parameter.

In a possible implementation, the sending, by the controller, different parameter values of an adjustment parameter to a target correction module, receiving combined power detection information that is corresponding to each parameter value and that is sent by the power detector, and determining the optimal parameter value from the parameter values based on the combined power detection information corresponding to each parameter value includes:

sending, by the controller, a first group of different parameter values of the adjustment parameter to the target correction module, receiving combined power detection information that is corresponding to each parameter value in the first group of different parameter values and that is sent by the power detector, and determining an optimal parameter value of the direct current compensation parameter based on the combined power detection information corresponding to each parameter value, where the first group of different parameter values are one group of different parameter values of the adjustment parameter that include a preset parameter value of the gain control parameter, a preset parameter value of the first cross transfer parameter, a preset parameter value of the second cross transfer parameter, and different parameter values of the direct current compensation parameter; and sending, by the controller, a second group of different parameter values of the adjustment parameter to the target correction module, receiving combined power detection information that is corresponding to each parameter value in the second group of different parameter values and that is sent by the power detector, and determining an optimal parameter value of the gain control parameter, an optimal parameter value of the first cross transfer parameter, and an optimal parameter value of the second cross transfer parameter based on the combined power detection information corresponding to each parameter value, where the second group of different parameter values are one group of different parameter values of the adjustment parameter that include the optimal parameter value of the direct current compensation parameter, different parameter values of the gain control parameter, different parameter values of the first cross transfer parameter, and different parameter values of the second cross transfer parameter. The sending, by the controller, the optimal parameter value to the target correction module includes: sending, by the controller, the optimal parameter value of the direct current compensation parameter, the optimal parameter value of the gain control parameter, the optimal parameter value of the first cross transfer parameter, and the optimal parameter value of the second cross transfer parameter to the target correction module. The performing, by the target correction module based on the optimal parameter value, signal adjustment on an input I/Q signal includes: performing, by the target correction module based on the optimal parameter value of the direct current compensation parameter, the optimal parameter value of the gain control parameter, the optimal parameter value of the first cross transfer parameter, and the optimal parameter value of the second cross transfer parameter, signal adjustment on the input I/Q signal.

In the solution shown in this embodiment of the present invention, the controller may determine the first group of different parameter values. The first group of different parameter values are the group of different parameter values of the adjustment parameter that include the preset parameter value of the gain control parameter, the preset parameter value of the first cross transfer parameter, the preset parameter value of the second cross transfer parameter, and the different parameter values of the direct current compensation parameter. The controller may send the preset parameter value of the gain control parameter, the preset parameter value of the second cross transfer parameter, the preset parameter value of the first cross transfer parameter, and one parameter value of the direct current compensation parameter to the target correction module each time, and the power detector may send, to the controller, combined power detection information detected each time. The controller determines the optimal parameter value of the direct current compensation parameter based on the power detection information sent by the power detector each time.

The controller may send the second group of different parameter values of the adjustment parameter to the target correction module. The second group of different parameter values are the group of different parameter values of the adjustment parameter that include the optimal parameter value of the direct current compensation parameter, the different parameter values of the gain control parameters, the different parameter values of the second cross transfer parameters, and the different parameter values of the first cross transfer parameter. The power detector may detect the combined power detection information, and send the combined power detection information to the controller. The controller may determine, based on the combined power detection information, the optimal parameter value of the first cross transfer parameter, the optimal parameter value of the gain control parameter, and the optimal parameter value of the second cross transfer parameter, and send the optimal parameter value of the first cross transfer parameter, the optimal parameter value of the gain control parameter, and the optimal parameter value of the second cross transfer parameter to the target correction module.

In a possible implementation, the balance adjustment parameter includes a direct current compensation parameter, a gain control parameter, and a second cross transfer parameter, and the gain control parameter includes a first gain control parameter and a second gain control parameter.

When the controller sends the different parameter values of the adjustment parameter to the target correction module, if no other correction module has obtained a corresponding optimal parameter value, the sending, by the controller, different parameter values of an adjustment parameter to a target correction module, receiving power detection information that is corresponding to each parameter value and that is sent by the power detector, and determining an optimal parameter value corresponding to the target correction module from the parameter values based on the power detection information corresponding to each parameter value includes: sending a third group of different parameter values of the adjustment parameter to the target correction module, receiving power detection information that is corresponding to each parameter value in the third group of different parameter values and that is sent by the power detector, and determining an optimal parameter value of the direct current compensation parameter based on the power detection information corresponding to each parameter value, where the third group of different parameter values are one group of different parameter values of the adjustment parameter that include a preset parameter value of the second cross transfer parameter, a preset parameter value of the first gain control parameter, a preset parameter value of the second gain control parameter, and different parameter values of the direct current compensation parameter; sending a fourth group of different parameter values of the adjustment parameter to the target correction module, receiving power detection information that is corresponding to each parameter value in the fourth group of different parameter values and that is sent by the power detector, and determining an optimal parameter value of the first gain control parameter and an optimal parameter value of the second cross transfer parameter based on the power detection information corresponding to each parameter value, where the fourth group of different parameter values are one group of different parameter values of the adjustment parameter that include the optimal parameter value of the direct current compensation parameter, the preset parameter value of the second gain control parameter, different parameter values of the first gain control parameter, and different parameter values of the second cross transfer parameter; and sending a fifth group of different parameter values of the adjustment parameter to the target correction module, receiving power detection information that is corresponding to each parameter value in the fifth group of different parameter values and that is sent by the power detector, and determining an optimal parameter value of the second gain control parameter based on the power detection information corresponding to each parameter value, where the fifth group of different parameter values are one group of different parameter values of the adjustment parameter that include the optimal parameter value of the direct current compensation parameter, the different parameter values of the first gain control parameter, different parameter values of the second gain control parameter, and the different parameter values of the second cross transfer parameter; and the sending, by the controller, the optimal parameter value to the target correction module includes: sending, by the controller, the optimal parameter value of the direct current compensation parameter, the optimal parameter values of the gain control parameters, and the optimal parameter value of the second cross transfer parameter to the target correction module. The performing, by the target correction module based on the optimal parameter value, signal adjustment on an input I/Q signal includes: performing, by the target correction module based on the optimal parameter value of the direct current compensation parameter, the optimal parameter values of the gain control parameters, and the optimal parameter value of the second cross transfer parameter, signal adjustment on the input I/Q signal.

In the solution shown in this embodiment of the present invention, when the controller sends the different parameter values of the adjustment parameter to the target correction module, if no other correction module has obtained a corresponding optimal parameter value, a correction module whose adjustment parameter needs to be determined is a first correction module in the microwave transmitter. Because rotation phase correction for the first correction module can be performed by an end that receives an I/Q signal, a rotation phase of the I/Q signal in the first correction module does not need to be corrected. The controller may determine the third group of different parameter values to be sent to the target correction module. The third group of different parameter values are the group of different parameter values of the adjustment parameter that include the preset parameter value of the first gain control parameter, the preset parameter value of the second gain control parameter, the preset parameter value of the second cross transfer parameter, and the different parameter values of the direct current compensation parameter. The controller may send the preset parameter value of the first gain control parameter, the preset parameter value of the second gain control parameter, the preset parameter value of the second cross transfer parameter, and one parameter value of the direct current compensation parameter to the target correction module each time, and receive power detection information that is corresponding to each parameter value of the direct current compensation parameter and that is sent by the power detector. The controller may determine the optimal parameter value of the direct current compensation parameter based on the power detection information corresponding to each parameter value of the direct current compensation parameter.

The controller may determine the fourth group of different parameter values to be sent to the target correction module. The fourth group of different parameter values are the group of different parameter values of the adjustment parameter that include the preset parameter value of the second gain control parameter, the optimal parameter value of the direct current compensation parameter, the different parameter values of the first gain control parameter, and the different parameter values of the second cross transfer parameter. The controller may send the preset parameter value of the second gain control parameter, the optimal parameter value of the direct current compensation parameter, one parameter value of the first gain control parameter, and one parameter value of the second cross transfer parameter to the target correction module each time, and receive power detection information that is corresponding to the parameter values sent each time and that is sent by the power detector. The controller may determine the optimal parameter value of the first gain control parameter and the optimal parameter value of the second cross transfer parameter based on the power detection information corresponding to the parameter values that are sent each time.

The controller may determine the fifth group of different parameter values to be sent to the target correction module. The fifth group of different parameter values are the group of different parameter values of the adjustment parameter that include the optimal parameter value of the direct current compensation parameter, the different parameter values of the first gain control parameter, the different parameter values of the second gain control parameter, and the different parameter values of the second cross transfer parameter. The controller may send the optimal parameter value of the direct current compensation parameter, one parameter value of the second gain control parameter, one parameter value of the first gain control parameter, and one parameter value of the second cross transfer parameter to the target correction module each time, and receive power detection information that is corresponding to the parameter values sent each time and that is sent by the power detector. The controller may determine the optimal parameter value of the second gain control parameter based on the power detection information corresponding to the parameter values that are sent each time.

In a possible implementation, the sending, by the controller, different parameter values of an adjustment parameter to a target correction module, receiving power detection information that is corresponding to each parameter value and that is sent by the power detector, and determining an optimal parameter value corresponding to the target correction module from the parameter values based on the power detection information corresponding to each parameter value includes: adjusting a parameter value of the direct current compensation parameter starting from a first initial parameter value preset for the direct current compensation parameter, sending parameter values of the adjustment parameter to the target correction module after each adjustment, where currently sent parameter values of the adjustment parameter include a second initial parameter value preset for the first gain control parameter, a fourth initial parameter value preset for the second gain control parameter, a third initial parameter value preset for the second cross transfer parameter, and a currently adjusted parameter value of the direct current compensation parameter, receiving one group of power detection information sent by the power detector and corresponding to the parameter values of the adjustment parameter that are obtained after each adjustment, calculating an average value of the group of power detection information, and determining that a parameter value that is of the direct current compensation parameter and that is corresponding to a minimum average value is the optimal parameter value of the direct current compensation parameter; adjusting a parameter value of the first gain control parameter starting from the second initial parameter value preset for the first gain control parameter and a parameter value of the second cross transfer parameter starting from the third initial parameter value preset for the second cross transfer parameter, sending parameter values of the adjustment parameter to the target correction module after each adjustment, where currently sent parameter values of the adjustment parameter include the optimal parameter value of the direct current compensation parameter, the fourth initial parameter value preset for the second gain control parameter, a currently adjusted parameter value of the first gain control parameter, and a currently adjusted parameter value of the second cross transfer parameter, receiving one group of power detection information sent by the power detector and corresponding to the parameter values of the adjustment parameter that are obtained after each adjustment, calculating a statistical variance of the group of power detection information, and determining that a parameter value of the first gain control parameter and a parameter value of the second cross transfer parameter that are corresponding to a minimum statistical variance are respectively the optimal parameter value of the first gain control parameter and the optimal parameter value of the second cross transfer parameter; and adjusting a parameter value of the second gain control parameter starting from the fourth initial parameter value preset for the second gain control parameter, the parameter value of the first gain control parameter starting from the optimal parameter value of the first gain control parameter, and the parameter value of the second cross transfer parameter starting from the optimal parameter value of the second cross transfer parameter, sending parameter values of the adjustment parameter to the target correction module after each adjustment, where currently sent parameter values of the adjustment parameter include the optimal parameter value of the direct current compensation parameter, a currently adjusted parameter value of the second gain control parameter, the currently adjusted parameter value of the first gain control parameter, and the currently adjusted parameter value of the second cross transfer parameter, receiving one group of power detection information sent by the power detector and corresponding to the parameter values of the adjustment parameter that are obtained after each adjustment, calculating an average value of the group of power detection information, and determining that a square of a parameter value that is of the second gain control parameter and that is corresponding to a minimum average value is the optimal parameter value of the second gain control parameter.

In the solution shown in this embodiment of the present invention, the first initial parameter value preset for the direct current compensation parameter may be the preset parameter value of the direct current compensation parameter, the second initial parameter value preset for the first gain control parameter may be the preset parameter value of the first gain control parameter, the third initial parameter value preset for the second cross transfer parameter may be the preset parameter value of the second cross transfer parameter, and the fourth initial parameter value preset for the second gain control parameter may be the preset parameter value of the second gain control parameter. When determining the optimal parameter value of the direct current compensation parameter, the controller may obtain the first initial parameter value preset for the direct current compensation parameter, perform adjustment starting from the first initial parameter value, send the parameter values of the adjustment parameter to the target correction module after each adjustment, receive one group of power detection information within preset duration sent by the power detector and corresponding to the parameter values of the adjustment parameter that are obtained after each adjustment, calculate an average value of the group of power detection information, and then determine that the parameter value that is of the direct current compensation parameter and that is corresponding to the minimum average value is the optimal parameter value of the direct current compensation parameter.

When determining the optimal parameter value of the first gain control parameter and the optimal parameter value of the second cross transfer parameter, the controller may obtain the second initial parameter value preset for the first gain control parameter and the third initial parameter value preset for the second cross transfer parameter, adjust the parameter value of the first gain control parameter starting from the second initial parameter value preset for the first gain control parameter and the parameter value of the second cross transfer parameter starting from the third initial parameter value preset for the second cross transfer parameter, send the parameter values of the adjustment parameter to the target correction module after each adjustment, receive one group of power detection information within preset duration sent by the power detector and corresponding to the parameter values of the adjustment parameter that are obtained after each adjustment, calculate a statistical variance of the group of power detection information, and determine that the parameter value of the first gain control parameter and the parameter value of second cross transfer parameter that are corresponding to the minimum statistical variance are respectively the optimal parameter value of the first gain control parameter and the optimal parameter value of the second cross transfer parameter.

When determining the optimal parameter value of the second gain control parameter, the controller may obtain the fourth initial parameter value preset for the second gain control parameter, the optimal parameter value of the first gain control parameter, and the optimal parameter value of the second cross transfer parameter, adjust the parameter value of the second gain control parameter starting from the fourth initial parameter value preset for the second gain control parameter, the parameter value of the first gain control parameter starting from the optimal parameter value of the first gain control parameter, and the parameter value of the second cross transfer parameter starting from the optimal parameter value of the second cross transfer parameter, send the parameter values of the adjustment parameter to the target correction module after each adjustment, receive one group of power detection information within preset duration sent by the power detector and corresponding to the parameter values of the adjustment parameter that are obtained after each adjustment, calculate an average value of the group of power detection information, and determine that the square of the parameter value that is of the second gain control parameter and that is corresponding to the minimum average value is the optimal parameter value of the second gain control parameter.

In a possible implementation, the balance adjustment parameter includes at least a direct current compensation parameter; and the sending, by the controller, different parameter values of an adjustment parameter to a target correction module, receiving power detection information that is corresponding to each parameter value and that is sent by the power detector, and determining an optimal parameter value corresponding to the target correction module from the parameter values based on the power detection information corresponding to each parameter value includes: adjusting a parameter value of the direct current compensation parameter starting from a first initial parameter value preset for the direct current compensation parameter, sending parameter values of the adjustment parameter to the target correction module after each adjustment, receiving one group of power detection information sent by the power detector and corresponding to the parameter values of the adjustment parameter that are obtained after each adjustment, calculating an average value of the group of power detection information, and determining that a parameter value that is of the direct current compensation parameter and that is corresponding to a minimum average value is an optimal parameter value of the direct current compensation parameter.

In the solution shown in this embodiment of the present invention, the balance adjustment parameter may include at least the direct current compensation parameter. The controller may obtain the first initial parameter value preset for the direct current compensation parameter, adjust the parameter value of the direct current compensation parameter starting from the first initial parameter value preset for the direct current compensation parameter, send the parameter values of the adjustment parameter to the target correction module after each adjustment, and receive power detection information detected by the power detector each time, that is, the group of power detection information corresponding to the parameter values of the adjustment parameter that are obtained after each adjustment. The controller may calculate the average value of the group of power detection information, and determine that the parameter value that is of the direct current compensation parameter and that is corresponding to the minimum average value is the optimal parameter value of the direct current compensation parameter.

According to a second aspect, a microwave transmitter is provided. The microwave transmitter includes a power detector, a controller, at least two correction modules, and at least two signal processing modules. The power detector, the controller, the at least one correction module, and the at least one signal processing module execute instructions to implement the signal adjustment method provided in the first aspect.

In a possible implementation, the at least one correction module may be one correction module, and the at least one signal processing module is one signal processing module.

In the solution shown in this embodiment of the present invention, the microwave transmitter includes only one transmit channel. The transmit channel has only one correction module, and one correction module is corresponding to one signal processing module.

In a possible implementation, the microwave transmitter further includes a phase detector and at least one rotation correction module.

A signal output end of each rotation correction module is electrically connected to a signal input end of one correction module, the phase detector is electrically connected to a signal output end of each signal processing module, and the phase detector is electrically connected to a control end of each rotation correction module.

In the solution shown in this embodiment of the present invention, the microwave transmitter may further include the phase detector and the at least one rotation correction module. The phase detector may be configured to detect a rotation phase of an I/Q signal, and the rotation correction module may be configured to correct the rotation phase of the I/Q signal to zero degrees, so that an I/Q signal output by the microwave transmitter has no rotation phase impairment.

The technical solutions provided in the embodiments of the present invention bring the following beneficial effects:

Based on the foregoing processing, when the microwave transmitter sends a plurality of I/Q signals at the same time, only one correction module is disposed for each I/Q signal.

In one microwave transmitter, only one power detector and one controller need to be disposed to implement imbalance adjustment, without a need to dispose a plurality of estimation modules and a plurality of envelope detectors. Therefore, a structure of the microwave transmitter is relatively simple.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic structural diagram of a microwave transmitter according to an embodiment of the present invention;

FIG. 2 is a schematic structural diagram of a microwave transmitter according to an embodiment of the present invention;

FIG. 3 is a schematic flowchart of signal adjustment according to an embodiment of the present invention;

FIG. 4 is a schematic structural diagram of a correction module according to an embodiment of the present invention;

FIG. 5 is a schematic structural diagram of a correction module according to an embodiment of the present invention; and

FIG. 6 is a schematic structural diagram of a microwave transmitter according to an embodiment of the present invention.

## DESCRIPTION OF EMBODIMENTS

To make the objectives, technical solutions, and advantages of the present invention clearer, the following further describes the implementations of the present invention in detail with reference to the accompanying drawings.

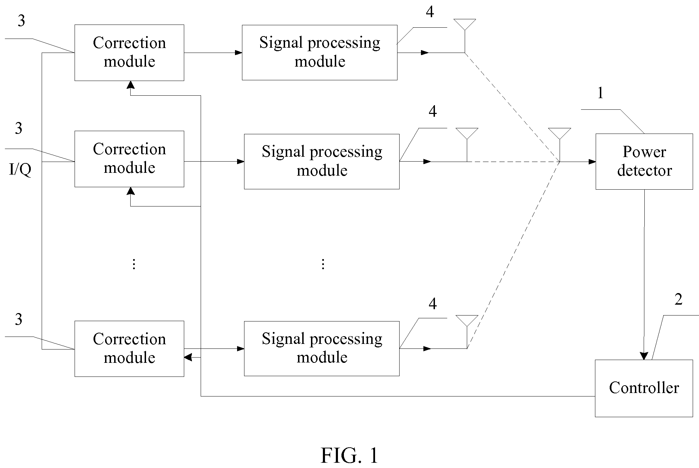

Embodiments of the present invention provide a signal adjustment method, and the method may be performed by a microwave transmitter. As shown in FIG. 1, the microwave transmitter includes a power detector 1, a controller 2, at least one correction module 3, and at least one signal processing module 4. A signal input end of each signal processing module 4 is electrically connected to a signal output end of one correction module 3, and the controller 2 is separately electrically connected to a control end of each correction module 3 and the power detector 1.

During implementation, the microwave transmitter may include the power detector 1, the controller 2, the at least one correction module 3, and the at least one signal processing module 4. Each signal processing module 4 may include a modulator, a frequency mixer, a filter, and a power amplifier, and further includes one signal output end and one signal input end. Each correction module 3 includes one signal input end, one signal output end, and one control end. The input end of each signal processing module 4 is electrically connected to a signal output end of one correction module 3, and the controller 2 is separately electrically connected to the control end of each correction module 3 and the power detector 1. The microwave transmitter has a plurality of transmit channels, and a transmit channel of the microwave transmitter may include one correction module and a corresponding signal processing module.

The power detector 1 may be configured to: detect power detection information of an I/Q signal output by the signal processing module 4, and send the detected power detection information of the I/Q signal to the controller 2.

The correction module 3 may be configured to perform, based on a parameter value that is of an adjustment parameter and that is sent by the controller 2 each time, signal adjustment on an input I/Q signal from an input end, and may send the adjusted I/Q signal to the signal processing module 4 connected to the correction module 3.

Optionally, the at least one correction module is one correction module 3, and the at least one signal processing module 4 is one signal processing module.

During implementation, the at least one correction module may be one correction module, and correspondingly, the at least one signal processing module is one signal processing module. One correction module is electrically connected to one signal processing module.

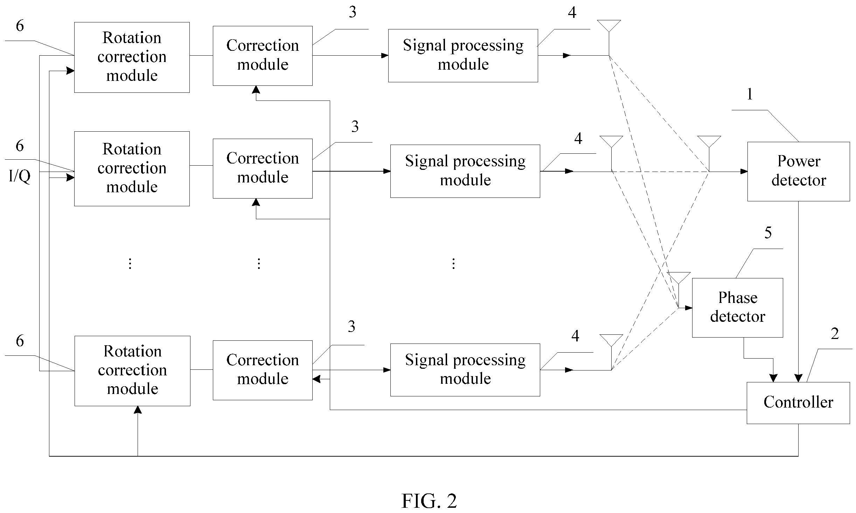

Optionally, as shown in FIG. 2, the microwave transmitter further includes a phase detector 5 and at least one rotation correction module 6.

A signal output end of each rotation correction module 6 is electrically connected to a signal input end of one correction module 3, the phase detector 5 is electrically connected to a signal output end of each signal processing module 4, and the phase detector 5 is electrically connected to a control end of each rotation correction module 6.

During implementation, the microwave transmitter further includes the phase detector 5 and the at least one rotation correction module 6. Each rotation correction module 6 includes one signal input end, one signal output end, and one control end. The signal output end of each rotation correction module 6 is electrically connected to an input end of one correction module 3, the phase detector 5 may be electrically connected to the signal output end of each signal processing module 4, and the phase detector 5 may be electrically connected to the control end of each rotation correction module 6.

The rotation correction module 6 may be configured to adjust a rotation phase of an I/Q signal, and the phase detector 5 may be configured to detect a rotation phase obtained after the I/Q signal passes through the signal processing module.

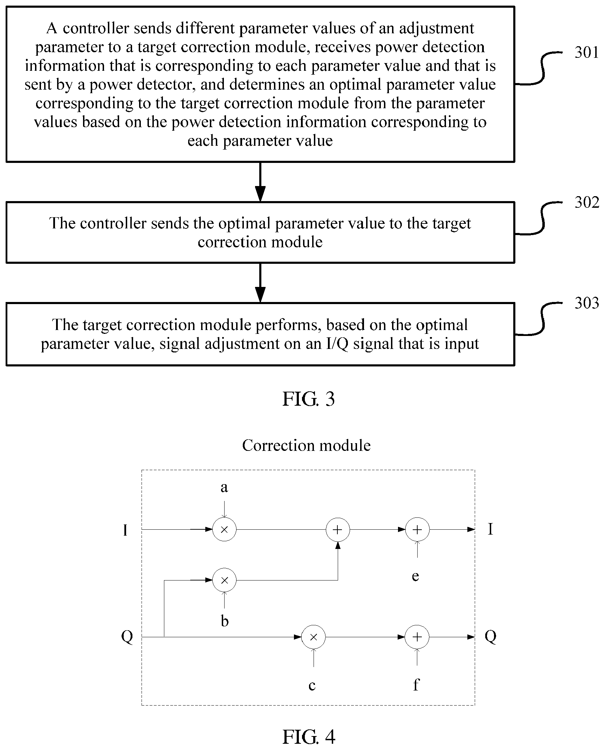

As shown in FIG. 3, a specific processing procedure of the method may include the following steps.

Step 301: A controller sends different parameter values of an adjustment parameter to a target correction module, receives power detection information that is corresponding to each parameter value and that is sent by a power detector, and determines an optimal parameter value corresponding to the target correction module from the parameter values based on the power detection information corresponding to each parameter value, where the received power detection information is power detection information of an I/Q signal output by a target signal processing module when the target correction module performs signal adjustment based on each parameter value sent by the controller, the target signal processing module is a signal processing module electrically connected to the target correction module, the adjustment parameter includes at least a balance adjustment parameter, and the target correction module is any one of at least one correction module.

The adjustment parameter includes at least the balance adjustment parameter, the target correction module is any one of the at least one correction module, and the target signal processing module is a signal processing module electrically connected to the target correction module.

During implementation, the controller may determine the different parameter values of the adjustment parameter corresponding to the target correction module, and then send the different parameter values of the adjustment parameter to the target correction module. When sending the different parameter values of the adjustment parameter to the target correction module, the controller may first send one group of parameter values of the adjustment parameter. The target correction module performs signal adjustment on the I/Q signal based on the group of parameter values of the adjustment parameter that are sent by the controller. The power detector may detect power detection information of the I/Q signal obtained after the signal adjustment, and send the power detection information to the controller. If the controller determines that the group of parameter values are not an optimal parameter value of the adjustment parameter, the controller may determine another group of parameter values of the adjustment parameter, and send the another group of parameter values of the adjustment parameter to the target correction module, until the controller determines the optimal parameter value of the adjustment parameter based on power detection information received each time. Then the controller sends the optimal parameter value of the adjustment parameter to the target correction module. After the target correction module performs signal adjustment on the I/Q signal by using the optimal parameter value, the I/Q signal output by the target signal processing module has no imbalance impairment.

In addition, the controller may send a plurality of different parameter values of the adjustment parameter corresponding to the target correction module to the target correction module at a time. After receiving the plurality of different parameter values of the adjustment parameter, the target correction module may successively perform, based on the plurality of different parameter values of the adjustment parameter, signal adjustment on an input I/Q signal. The power detector detects power detection information that is output when the target correction module separately performs signal adjustment on the I/Q signal based on the plurality of different parameter values of the adjustment parameter, and sends the power detection information to the controller. The controller determines the optimal parameter value from the plurality of different parameter values of the adjustment parameter based on the power detection information. This step may be specifically implemented by a controller 2.

Optionally, the balance adjustment parameter includes a direct current compensation parameter, a gain control parameter, and a second cross transfer parameter.

During implementation, as shown in FIG. 4, the balance adjustment parameter may include the direct current compensation parameter, the gain control parameter, and the second cross transfer parameter. The direct current compensation parameter may be used to adjust direct current imbalance of the I/Q signal. Direct current compensation parameters of an I signal and a Q signal may be separately represented by e and f. To be specific, an optimal parameter value of e is superposed on the I signal, and the I signal has no direct current impairment; an optimal parameter value of f is superposed on the Q signal, and the Q signal has no direct current impairment. The gain control parameter may include a first gain control parameter and a second gain control parameter. The first gain control parameter may be represented by a, and if a gain of the I signal does not change, the first gain control parameter is an I-signal to I-signal scaling parameter. The second gain control parameter may be represented by c, and the second gain control parameter is a Q-signal to Q-signal scaling parameter. The second cross transfer parameter may be represented by b, and the second cross transfer parameter is a Q-signal to I-signal scaling parameter.

Optionally, when the adjustment parameter further includes a first cross transfer parameter, processing in step 301 may be as follows:

When the controller sends the different parameter values of the adjustment parameter to the target correction module, if another correction module (a correction module in another transmit channel) has obtained a corresponding optimal parameter value and is in a working state of performing, based on the optimal parameter value, signal adjustment on the input I/Q signal, the adjustment parameter further includes the first cross transfer parameter. The controller receives combined power detection information that is corresponding to each parameter value and that is sent by the power detector, and determines the optimal parameter value from the parameter values based on the combined power detection information corresponding to each parameter value. The combined power detection information corresponding to each parameter value is power detection information obtained after power detection information of an I/Q signal output, when the another correction module performs signal adjustment based on the corresponding optimal parameter value, by a signal processing module connected to the another correction module is added to power detection information of an I/Q signal output by the target signal processing module when the target correction module performs signal adjustment based on each parameter value.

The combined power detection information corresponding to each parameter value may be the power detection information obtained after the power detection information of the I/Q signal output, when the another correction module performs signal adjustment based on the optimal parameter value, by the signal processing module connected to the another correction module is added to the power detection information of the I/Q signal output by the target signal processing module when the target correction module performs signal adjustment based on each parameter value.

During implementation, the microwave transmitter has a plurality of transmit channels, and one correction module and one signal processing module are disposed on each transmit channel. Signal adjustment is performed on an I/Q signal transmitted on each transmit channel.

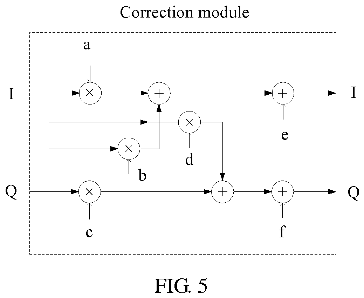

As shown in FIG. 5, when the controller sends the different parameter values of the adjustment parameter to the target correction module, the controller may determine whether the optimal parameter value corresponding to the correction module in the another transmit channel (that is, the another correction module) is currently determined. If the another correction module has obtained the corresponding optimal parameter value, and the another correction module is in a working state of performing, based on the optimal parameter value, signal adjustment on the input I/Q signal, the adjustment parameter needs to further include the first cross transfer parameter. The first cross transfer parameter may be represented by d, and the first cross transfer parameter is an I-signal to Q-signal scaling parameter.

The controller may determine one group of parameter values of the adjustment parameter corresponding to the target correction module, and the adjustment parameter includes the balance adjustment parameter and the first cross transfer parameter in this case. Then the controller sends the group of parameter values of the adjustment parameter to the target correction module. The power detector may detect combined power detection information output by the target signal processing module after the target correction module performs signal adjustment on the I/Q signal based on the received group of parameter values, and send the combined power detection information to the controller. The controller may determine, based on the combined power detection information, whether the group of parameter values of the adjustment parameter are the optimal parameter value. If the controller determines that the group of parameter values are not the optimal parameter value of the adjustment parameter, the controller may determine another group of parameter values of the adjustment parameter, and send the another group of parameter values of the adjustment parameter to the target correction module, until the controller determines the optimal parameter value of the adjustment parameter based on combined power detection information received each time.

Optionally, the controller may determine the optimal parameter value from the different parameters of the adjustment parameter based on the combined power detection information, and processing in step 301 may be as follows: The controller sends a first group of different parameter values of the adjustment parameter to the target correction module, receives combined power detection information that is corresponding to each parameter value in the first group of different parameter values and that is sent by the power detector, and determines an optimal parameter value of the direct current compensation parameter based on the combined power detection information corresponding to each parameter value. The first group of different parameter values are one group of different parameter values of the adjustment parameter that include a preset parameter value of the gain control parameter, a preset parameter value of the first cross transfer parameter, a preset parameter value of the second cross transfer parameter, and different parameter values of the direct current compensation parameter.

The controller sends a second group of different parameter values of the adjustment parameter to the target correction module, receives combined power detection information that is corresponding to each parameter value in the second group of different parameter values and that is sent by the power detector, and determines an optimal parameter value of the gain control parameter, an optimal parameter value of the first cross transfer parameter, and an optimal parameter value of the second cross transfer parameter based on the combined power detection information corresponding to each parameter value. The second group of different parameter values are one group of different parameter values of the adjustment parameter that include the optimal parameter value of the direct current compensation parameter, different parameter values of the gain control parameter, different parameter values of the first cross transfer parameter, and different parameter values of the second cross transfer parameter.

The first group of different parameter values may be the group of different parameter values of the adjustment parameter that include the preset parameter value of the gain control parameter, the preset parameter value of the first cross transfer parameter, the preset parameter value of the second cross transfer parameter, and the different parameter values of the direct current compensation parameter. The preset parameter value of the gain control parameter, the preset parameter value of the first cross transfer parameter, and the preset parameter value of the second cross transfer parameter may be preset by a skilled person, and stored in the controller. The different parameter values of the direct current compensation parameter are a plurality of parameter values obtained by performing adjustment based on a preset step starting from an initial parameter value of the direct current compensation parameter. For example, the first group of different parameter values may include a preset parameter value of a, a preset parameter value of c, a preset parameter value of b, a preset parameter value of d, different parameter values of e, and different parameter values of f. The second group of different parameter values may include the group of different parameter values of the adjustment parameter that include the optimal parameter value of the direct current compensation parameter, the different parameter values of the gain control parameter, the different parameter values of the first cross transfer parameter, and the different parameter values of the second cross transfer parameter. For example, the second group of different parameter values may include different parameter values of a, different parameter values of c, different parameter values of b, different parameter values of d, an optimal parameter value of e, and an optimal parameter value of f. The preset parameter value of the gain control parameter, the preset parameter value of the first cross transfer parameter, and the preset parameter value of the second cross transfer parameter described herein may be respectively a second initial parameter value preset for the first gain control parameter, a fourth initial parameter value preset for the second gain control parameter, a fifth initial parameter value preset for the first cross transfer parameter, and a third initial parameter value preset for the second cross transfer parameter described below.

During implementation, the controller may determine the preset parameter value of the gain control parameter, the preset parameter value of the first cross transfer parameter, the preset parameter value of the second cross transfer parameter, and a preset parameter value of the direct current compensation parameter, where the adjustment parameter corresponding to the target correction module includes the gain control parameter, the first cross transfer parameter, the second cross transfer parameter, and the direct current compensation parameter. The controller adjusts a parameter value of the direct current compensation parameter based on a first preset adjustment step (the first preset adjustment step may include adjustment steps of e and f) starting from the preset parameter value (which may be a first initial parameter value described below) of the direct current compensation parameter, and sends parameter values of the adjustment parameter to the target correction module after each adjustment. Currently sent parameter values of the adjustment parameter include the preset parameter value of the gain control parameter, the preset parameter value of the first cross transfer parameter, the preset parameter value of the second cross transfer parameter, and a currently adjusted parameter value of the direct current compensation parameter. The controller may receive one group of combined power detection information sent by the power detector and corresponding to a parameter value that is of the direct current compensation parameter and that is obtained after each adjustment, and calculate an average value of the group of combined power detection information, until an average value corresponding to a current adjustment is greater than an average value corresponding to a previous adjustment, and an average value corresponding to an adjustment before the previous adjustment is also greater than the average value corresponding to the previous adjustment. In this case, the controller determines that a parameter value that is of the direct current compensation parameter and that is obtained after the previous adjustment is the optimal parameter value of the direct current compensation parameter. For example, preset parameter values of gain control parameters a and c are respectively $a_0$ and $c_0$, a preset parameter value of a second cross transfer parameter b is $b_0$, a preset parameter value of a first cross transfer parameter d is $d_0$, and preset parameter values of direct current compensation parameters e and f are respectively $e_1$ and $f_1$ (a meaning of each parameter has been described above, and details are not described herein again). The controller may send $a_0$, $b_0$, $c_0$, $d_0$, $e_1$, and $f_1$ to the target correction module. The controller may receive one group of combined power detection information that is corresponding to $a_0$, $b_0$, $c_0$, $d_0$, $e_1$, and $f_1$ and that is sent by the power detector, calculate an average value of the group of combined power detection information, and then update $e_1$ and $f_1$ to $e_2$ and $f_2$ based on preset adjustment steps corresponding to e and f. The controller may receive one group of combined power detection information that is corresponding to $a_0$, $b_0$, $c_0$, $d_0$, $e_2$, and $f_2$ and that is sent by the power detector, and calculate an average value of the group of combined power detection information. If an average value, of one group of combined power detection information that is corresponding to $a_0$, $b_0$, $c_0$, $d_0$, $e_M$, and $f_M$ and that is sent by the power detector, calculated by the controller based on the group of combined power detection information is less than an average value of one group of combined power detection information corresponding to $a_0$, $b_0$, $c_0$, $d_0$, $e_N$, and $f_N$, and the average value of the group of combined power detection information corresponding to $a_0$, $b_0$, $c_0$, $d_0$, $e_M$, and $f_M$ is also less than an average value of one group of combined power detection information corresponding to $a_0$, $b_0$, $c_0$, $d_0$, $e_P$, and $f_P$, the controller determines that $e_M$ and $f_M$ are optimal parameter values of the direct current compensation parameters, where N=M-1, and P=M+1.

In addition, the controller may determine the preset parameter value of the gain control parameter, the preset parameter value of the first cross transfer parameter, the preset parameter value of the second cross transfer parameter, and a plurality of parameter values of the direct current compensation parameter, where the adjustment parameter corresponding to the target correction module includes the gain control parameter, the first cross transfer parameter, the second cross transfer parameter, and the direct current compensation parameter. Then the controller sends the determined various parameter values to the target correction module at a time. The power detector may detect combined power detection information output by the target signal processing module when the target correction module performs signal adjustment based on each of the plurality of parameter values of the direct current compensation parameter, and send the combined power detection information to the controller. The controller may determine the optimal parameter value of the direct current compensation parameter based on the combined power detection information corresponding to each parameter value.

After determining the optimal parameter value of the direct current compensation parameter, the controller may send the second group of different parameter values of the adjustment parameter to the target correction module. The power detector may receive combined power detection information output by the target signal processing module each time when the target correction module performs signal adjustment based on the second group of different parameter values. The power detector sends the detected combined power detection information to the controller.

The controller receives combined power detection information sent by the power detector each time, and the controller may determine the optimal parameter value of the gain control parameter, the optimal parameter value of the first cross transfer parameter, and the optimal parameter value of the second cross transfer parameter based on the combined power detection information sent by the power detector each time.

Optionally, the adjustment parameter includes the direct current compensation parameter, the gain control parameter, the first cross transfer parameter, and the second cross transfer parameter. The controller may determine the optimal parameter value from the different parameters of the adjustment parameter based on the combined power detection information. Processing of determining the optimal parameter value of the gain control parameter, the optimal parameter value of the first cross transfer parameter, and the optimal parameter value of the second cross transfer parameter in step 301 may be as follows:

Step 0: Obtain the second initial parameter value preset for the first gain control parameter, the third initial parameter value preset for the second cross transfer parameter, the fourth initial parameter value preset for the second gain control parameter, and the fifth initial parameter value preset for the first cross transfer parameter.

Step 1: The controller adjusts a parameter value of the first gain control parameter, a parameter value of the second gain control parameter, a parameter value of the first cross transfer parameter, and a parameter value of the second cross transfer parameter based on a preset rotation adjustment rule starting from the second initial parameter value preset for the first gain control parameter, the fourth initial parameter value preset for the second gain control parameter, the fifth initial parameter value preset for the first cross transfer parameter, and the third initial parameter value preset for the second cross transfer parameter, and sends parameter values of the adjustment parameter to the target correction module after each adjustment, where currently sent parameter values of the adjustment parameter include the optimal parameter value of the direct current compensation parameter, a currently adjusted parameter value of the first gain control parameter, a currently adjusted parameter value of the second gain control parameter, a currently adjusted parameter value of the first cross transfer parameter, and a currently adjusted parameter value of the second cross transfer parameter. The controller receives one group of combined power detection information sent by the power detector and corresponding to the parameter values of the adjustment parameter that are obtained after each adjustment, and calculates an average value of the group of combined power detection information, until an average value corresponding to a current adjustment is less than an average value corresponding to a previous adjustment, and an average value corresponding to an adjustment before the previous adjustment is also less than the average value corresponding to the previous adjustment. In this case, the controller determines that a parameter value of the first gain control parameter, a parameter value of the second gain control parameter, a parameter value of the first cross transfer parameter, and a parameter value of the second cross transfer parameter that are obtained after the previous adjustment are respectively an optimal parameter value of the first gain control parameter, an optimal parameter value of the second gain control parameter, the optimal parameter value of the first cross transfer parameter, and the optimal parameter value of the second cross transfer parameter.

Step 2: The controller adjusts the parameter value of the first gain control parameter based on a second preset adjustment step starting from the optimal parameter value that is of the first gain control parameter and that is obtained in step 1, and the parameter value of the second cross transfer parameter based on a third preset adjustment step starting from the optimal parameter value that is of the second cross transfer parameter and that is obtained in step 1, and sends parameter values of the adjustment parameter to the target correction module after each adjustment, where currently sent parameter values of the adjustment parameter include the optimal parameter value of the direct current compensation parameter, the optimal parameter value that is of the second gain control parameter and that is obtained in step 1, the optimal parameter value that is of the first cross transfer parameter and that is obtained in step 1, the currently adjusted parameter value of the first gain control parameter, and the currently adjusted parameter value of the second cross transfer parameter. The controller receives one group of combined power detection information sent by the power detector and corresponding to the parameter values of the adjustment parameter that are obtained after each adjustment, and calculates a statistical variance of the group of combined power detection information, until a statistical variance corresponding to a current adjustment is greater than a statistical variance corresponding to a previous adjustment, and a statistical variance corresponding to an adjustment before the previous adjustment is also greater than the statistical variance corresponding to the previous adjustment. In this case, the controller determines that a parameter value of the first gain control parameter and a parameter value of the second cross transfer parameter that are obtained after the previous adjustment are respectively the optimal parameter value of the first gain control parameter and the optimal parameter value of the second cross transfer parameter.

Step 3: The controller adjusts the parameter value of the first gain control parameter based on a fourth preset adjustment step starting from the optimal parameter value that is of the first gain control parameter and that is obtained in step 2, the parameter value of the second cross transfer parameter based on a fifth preset adjustment step starting from the optimal parameter value that is of the second cross transfer parameter and that is obtained in step 2, the parameter value of the second gain control parameter based on a sixth preset adjustment step starting from the optimal parameter value that is of the second gain control parameter and that is obtained in step 1, and the parameter value of the first cross transfer parameter based on a seventh preset adjustment step starting from the optimal parameter value that is of the first cross transfer parameter and that is obtained in step 1, and sends parameter values of the adjustment parameter to the target correction module after each adjustment, where currently sent parameter values of the adjustment parameter include the optimal parameter value of the direct current compensation parameter, the currently adjusted parameter value of the first gain control parameter, the currently adjusted parameter value of the second gain control parameter, the currently adjusted parameter value of the first cross transfer parameter, and the currently adjusted parameter value of the second cross transfer parameter. The controller receives one group of combined power detection information sent by the power detector and corresponding to the parameter values of the adjustment parameter that are obtained after each adjustment, and calculates an average value of the group of combined power detection information, until an average value corresponding to a current adjustment is greater than an average value corresponding to a previous adjustment, and an average value corresponding to an adjustment before the previous adjustment is also greater than the average value corresponding to the previous adjustment. In this case, the controller determines that a parameter value of the second gain control parameter and a parameter value of the first cross transfer parameter that are obtained after the previous adjustment are respectively a to-be-processed parameter value of the second gain control parameter and a to-be-processed parameter value of the first cross transfer parameter.

Step 4: If step 1 to step 3 are cyclically performed for less than or equal to one time, or a difference between an optimal parameter value that is of the first gain control parameter and that is obtained after current performing of step 3 and an optimal parameter value that is of the first gain control parameter and that is obtained after previous performing of step 3 is greater than a first preset threshold, or a difference between a to-be-processed parameter value that is of the second gain control parameter and that is obtained after current performing of step 3 and a to-be-processed parameter value that is of the second gain control parameter and that is obtained after previous performing of step 3 is greater than a second preset threshold, or a difference between a to-be-processed parameter value that is of the first cross transfer parameter value and that is obtained after current performing of step 3 and a to-be-processed parameter value that is of the first cross transfer parameter value and that is obtained after previous performing of step 3 is greater than a third preset threshold, or a difference between a to-be-processed parameter value that is of the second cross transfer parameter value and that is obtained after current performing of step 3 and a to-be-processed parameter value that is of the second cross transfer parameter value and that is obtained after previous performing of step 3 is greater than a fourth preset threshold, an initial parameter value of the first gain control parameter is updated to the optimal parameter value that is of the first gain control parameter and that is determined in step 2, an initial parameter value of the second cross transfer parameter is updated to the optimal parameter value that is of the first cross transfer parameter value and that is obtained in step 2, an initial parameter value of the second gain control parameter is updated to the to-be-processed parameter value that is of the second gain control parameter and that is determined in step 3, an initial parameter value of the first cross transfer parameter is updated to the to-be-processed parameter value that is of the first cross transfer parameter value and that is determined in step 3, and step 1 is performed; or if step 1 to step 3 are cyclically performed for greater than one time, and a difference between an optimal parameter value that is of the first gain control parameter and that is obtained after current performing of step 3 and a parameter value that is of the first gain control parameter and that is obtained after previous performing of step 3 is less than or equal to a first preset threshold, a difference between a to-be-processed parameter value that is of the second gain control parameter and that is obtained after current performing of step 3 and a to-be-processed parameter value that is of the second gain control parameter and that is obtained after previous performing of step 3 is less than or equal to a second preset threshold, a difference between a to-be-processed parameter value that is of the first cross transfer parameter value and that is obtained after current performing of step 3 and a to-be-processed parameter value that is of the first cross transfer parameter value and that is obtained after previous performing of step 3 is less than or equal to a third preset threshold, and a difference between an optimal parameter value that is of the second cross transfer parameter value and that is obtained after current performing of step 3 and an optimal parameter value that is of the second cross transfer parameter value and that is obtained after previous performing of step 3 is less than or equal to a fourth preset threshold, after the current performing of step 3 is completed, a square of the to-be-processed parameter value of the second gain control parameter and a square of the to-be-processed parameter value of the first cross transfer parameter value are respectively determined as the optimal parameter value of the second gain control parameter and the optimal parameter value of the first cross transfer parameter, and the optimal parameter value of the first gain control parameter and the optimal parameter value of the second cross transfer parameter that are determined in step 2 are respectively determined as the optimal parameter value of the first gain control parameter and the optimal parameter value of the second cross transfer parameter. During implementation, in step 0, a skilled person may preset the second initial parameter value preset for the first gain control parameter, the fourth initial parameter value preset for the second gain control parameter, the fifth initial parameter value preset for the first cross transfer parameter, and the third initial parameter value preset for the second cross transfer parameter.

In step 1, the preset rotation adjustment rule may be preset by a skilled person, and stored in the controller. The second initial parameter value preset for the first gain control parameter is $a_{11}$, the fourth initial parameter value preset for the second gain control parameter is $c_{11}$, the third initial parameter value preset for the second cross transfer parameter is $b_{11}$, the fifth initial parameter value preset for the first cross transfer parameter is $d_{11}$ (the meaning of each parameter has been described above, and details are not described herein again), and optimal parameter values of direct current compensation parameters are $e_0$ and $f_0$. The controller may send $a_{11}$, $b_{11}$, $c_{11}$, $d_{11}$, $e_0$, $f_0$ to the target correction module. The controller may receive one group of combined power detection information that is corresponding to $a_{11}$, $b_{11}$, $c_{11}$, $d_{11}$, $e_0$, and $f_0$ and that is sent by the power detector, calculate an average value of the group of combined power detection information, and then update $a_{11}$, $b_{11}$, $c_{11}$, and $d_{11}$ to $a_{12}$, $b_{12}$, $c_{12}$, and $d_{12}$ based on the preset rotation adjustment rule (adjust $\phi$ based on a preset step each time, and multiply a matrix that includes $a_{11}$, $b_{11}$, $c_{11}$, and $d_{11}$ by a matrix with a variable of $\phi$, to obtain a matrix that includes $a_{12}$, $b_{12}$, $c_{12}$, and $d_{12}$, and then obtain values of $a_{12}$, $b_{12}$, $c_{12}$, and $d_{12}$, for example $\begin{bmatrix} a_{12} & b_{12} \\ c_{12} & d_{12} \end{bmatrix} = \begin{bmatrix} \cos\phi_1 & \sin\phi_1 \\ -\sin\phi_1 & \cos\phi_1 \end{bmatrix} \cdot \begin{bmatrix} a_{11} & b_{11} \\ c_{11} & d_{11} \end{bmatrix}$ ). The controller may receive one group of combined power detection information that is corresponding to $a_{12}$, $b_{12}$, $c_{12}$, $d_{12}$, $e_0$, and $f_0$ and that is sent by the power detector, and calculate an average value of the group of combined power detection information. If an average value, of one group of combined power detection information that is corresponding to $a_{1N}$, $b_{1N}$, $c_{1N}$, $d_{1N}$, $e_0$, and $f_0$ and that is sent by the power detector, calculated by the controller based on the group of combined power detection information is less than an average value of one group of combined power detection information corresponding to $a_{1M}$, $b_{1M}$, $c_{1M}$, $d_{1M}$, $e_0$, and $f_0$, and an average value of one group of combined power detection information corresponding to $a_{1P}$, $b_{1P}$, $c_{1P}$, $d_{1P}$, $e_0$, and $f_0$ is also less than the average value of the group of combined power detection information corresponding to $a_{1M}$, $b_{1M}$, $c_{1M}$, $d_{1M}$, $e_0$, and $f_0$, the controller determines that $a_{1M}$, $b_{1M}$, $c_{1M}$, and $d_{1M}$ are respectively the optimal parameter value of the first gain control parameter, the optimal parameter value of the second cross transfer parameter, the optimal parameter value of the second gain control parameter, and the optimal parameter value of the first cross transfer parameter, where N=M-1, and P=M+1.

In step 2, the second preset adjustment step and the third preset adjustment step may be preset by a skilled person, and stored in the controller. The controller may adjust $a_{1M}$ to $a_{21}$ based on the second preset adjustment step starting from the optimal parameter value $a_{1M}$ that is of the first gain control parameter in the adjustment parameter and that is obtained in step 1, and $b_{1M}$ to $b_{21}$ based on the third preset adjustment step starting from the optimal parameter value $b_{1M}$ that is of the second cross transfer parameter in the adjustment parameter and that is obtained in step 1, and then send $a_{21}$, $b_{21}$, $c_{1M}$, $d_{1M}$, $e_0$, and $f_0$ to the target correction module. The controller may receive one group of combined power detection information that is corresponding to $a_{21}$, $b_{21}$, $c_{1M}$, $d_{1M}$, $e_0$, and $f_0$ and that is sent by the power detector, calculate a statistical variance of the group of combined power detection information, and then separately adjust $a_{21}$ and $b_{21}$ to $a_{22}$ and $b_{22}$ based on the second preset adjustment step and the third preset adjustment step. The controller may receive one group of combined power detection information that is corresponding to $a_{22}$, $b_{22}$, $c_{1M}$, $d_{1M}$, $e_0$, and $f_0$ and that is sent by the power detector, and calculate a statistical variance of the group of combined power detection information. If a statistical variance, of one group of combined power detection information that is corresponding to $a_{2N}$, $b_{2N}$, $c_{1M}$, $d_{1M}$, $e_0$, and $f_0$ and that is sent by the power detector, calculated by the controller based on the group of combined power detection information is greater than a statistical variance of one group of combined power detection information corresponding to $a_{2M}$, $b_{2M}$, $c_{1M}$, $d_{1M}$, $e_0$, and $f_0$, and a statistical variance of one group of combined power detection information corresponding to $a_{2P}$, $b_{2P}$, $c_{1M}$, $d_{1M}$, $e_0$, and $f_0$ is also greater than the statistical variance of the group of combined power detection information corresponding to $a_{2M}$, $b_{2M}$, $c_{1M}$, $d_{1M}$, $e_0$, and $f_0$, the controller determines that $a_{2M}$ and $b_{2M}$ are respectively the optimal parameter value of the first gain control parameter and the optimal parameter value of the second cross transfer parameter, where N=M-1, and P=M+1.

In step 3, the fourth preset adjustment step, the fifth preset adjustment step, the sixth preset adjustment step, and the seventh preset adjustment step may be preset by a skilled person, and stored in the controller. When the optimal parameter value of the second gain control parameter and the optimal parameter value of the first cross transfer parameter are determined, parameter values of the direct current compensation parameters are optimal parameter values $e_0$ and $f_0$, the initial parameter value of the first gain control parameter and the initial parameter value of the second cross transfer parameter in step 3 are respectively $a_{2M}$ and $b_{2M}$ determined in step 2, and the initial parameter value of the second gain control parameter and the initial parameter value of the first cross transfer parameter are respectively $c_{1M}$ and $d_{1M}$ determined in step 1. The controller may change $a_{2M}$ and $b_{2M}$ to $a_{31}$ and $b_{31}$ by using an equal proportion based on the fourth preset adjustment step and the fifth preset adjustment step, and change $c_{1M}$ and $d_{1M}$ to $c_{31}$ and $d_{31}$ by using an inverse proportion based on the sixth preset adjustment step and the seventh preset adjustment step (for example, $a_{2M}$ is 1.2, $b_{2M}$ is 0.6, $c_{1M}$ is 3.2, and $d_{1M}$ is 2.4, $a_{31}$ and $b_{31}$ may be respectively 2.4 and 1.2, and $c_{31}$ and $d_{31}$ may be respectively 1.6 and 1.2), and then send $a_{31}$, $b_{31}$, $c_{31}$, $d_{31}$, $e_0$, and $f_0$ to the target correction module. The controller may receive one group of combined power detection information that is corresponding to $a_{31}$, $b_{31}$, $c_{31}$, $d_{31}$, $e_0$, and $f_0$ and that is sent by the power detector, calculate an average value of the group of combined power detection information, and then separately adjust $a_{31}$, $b_{31}$, $c_{31}$, and $d_{31}$ to $a_{32}$, $b_{32}$, $c_{32}$, and $d_{32}$ based on the fourth preset adjustment step, the fifth preset adjustment step, the sixth preset adjustment step, and the seventh preset adjustment step. The controller may receive one group of combined power detection information that is corresponding to $a_{32}$, $b_{32}$, $c_{32}$, $d_{32}$, $e_0$, and $f_0$ and that is sent by the power detector, and calculate a statistical variance of the group of combined power detection information. If an average value, of one group of combined power detection information that is corresponding to $a_{3N}$, $b_{3N}$, $c_{3N}$, $d_{3N}$, $e_0$, and $f_0$ and that is sent by the power detector, calculated by the controller based on the group of combined power detection information is greater than an average value of one group of combined power detection information corresponding to $a_{3M}$, $b_{3M}$, $c_{3M}$, $d_{3M}$, $e_0$, and $f_0$, and an average value of one group of combined power detection information corresponding to $a_{3P}$, $b_{3P}$, $c_{3P}$, $d_{3P}$, $e_0$, and $f_0$ is also greater than the average value of the group of combined power detection information corresponding to $a_{3M}$, $b_{3M}$, $c_{3M}$, $d_{3M}$, $e_0$, and $f_0$, the controller determines that $c_{3M}$ and $d_{3M}$ are respectively the to-be-processed parameter value of the second gain control parameter and the to-be-processed parameter value of the first cross transfer parameter, where N=M-1, and P=M+1.

In step 4, the first preset threshold, the second preset threshold, the third preset threshold, and the fourth preset threshold may be preset by a skilled person, and stored in the controller. After step 3 is successively performed twice, if determined optimal parameter values of the first gain control parameter in the adjustment parameter are $a_{NM}$ and $a_{PO}$, optimal parameter values of the second cross transfer parameter value are $b_{NM}$ and $b_{PO}$, to-be-processed parameter values of the second gain control parameter are $c_{NM}$ and $c_{PO}$, to-be-processed parameter values of the first cross transfer parameter are $d_{NM}$ and $d_{PO}$, a difference between $a_{NM}$ and $a_{PO}$ is less than or equal to the first preset threshold, a difference between $b_{NM}$ and $b_{PO}$ is less than or equal to the second preset threshold, a difference between $c_{NM}$ and $c_{PO}$ is less than or equal to the third preset threshold, and a difference between $d_{NM}$ and $d_{PO}$ is less than or equal to the fourth preset threshold, a cycle of performing step 3 ends, and squares of $a_{PO}$, $b_{PO}$, $c_{PO}$ and $d_{PO}$ are separately determined as the optimal parameter value of the first gain control parameter, the optimal parameter value of the second cross transfer parameter, the optimal parameter value of the second gain control parameter, and the optimal parameter value of the first cross transfer parameter. In this way, the controller determines an optimal parameter value of an adjustment parameter of a transmit channel in which the target correction module is located. The controller may enable a next transmit channel, and determine an optimal parameter value of an adjustment parameter of the next transmit channel, until optimal parameter values of adjustment parameters that are separately corresponding to correction modules in all transmit channels included in the microwave transmitter are determined.

In addition, in step 301, if the target correction module is a correction module of a first transmit channel in the microwave transmitter, step 1 and step 4 may not be performed. This is because when a transmit channel other than the first transmit channel performs rotation phase correction on an I/Q signal, a change of a phase of an I/Q signal of the another transmit channel relative to a phase of an I/Q signal of the first transmit channel is determined. In addition, when the microwave transmitter has only one correction module, and the microwave transmitter has only one transmit channel, the adjustment parameter includes only the balance adjustment parameter, and step 1 and step 4 may not be performed (which is described in detail below).

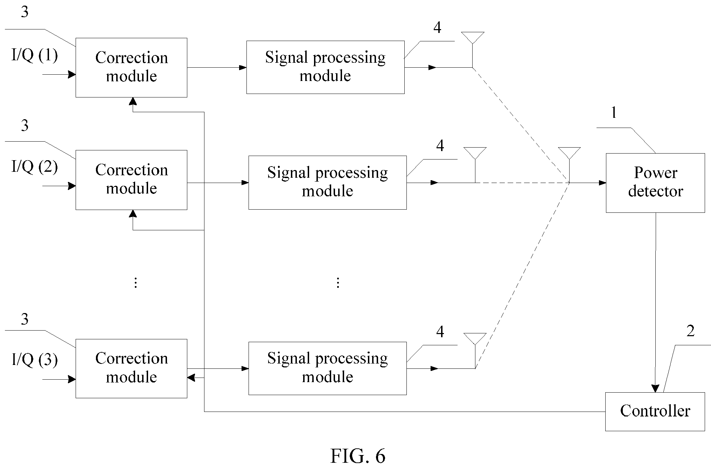

In addition, as shown in FIG. 6, the microwave transmitter has a plurality of transmit channels. If I/Q signals transmitted by the transmit channels are different, when step 1 is being performed, an input I/Q signal to a transmit channel for which an optimal parameter value of an adjustment parameter is currently being determined is the input I/Q signal to the first transmit channel in the microwave transmitter. When step 2 and step 3 are being performed, I/Q signals that are input to transmit channels for which optimal parameter values of adjustment parameters are currently being determined may be the input I/Q signal to the first transmit channel in the microwave transmitter, or may be I/Q signals that are input to the respective transmit channels.

In step 301, the power detector detects combined power detection information and power detection information that are of the I/Q signal output by the signal processing module. The power detector may receive the combined power detection information and the power detection information by using a near field probe near the microwave transmitter, or may receive the combined power detection information and the power detection information by using a remote antenna on a communications peer end. This is not limited in this embodiment of the present invention.

Optionally, the balance adjustment parameter includes a direct current compensation parameter, a gain control parameter, and a second cross transfer parameter. The gain control parameter includes a first gain control parameter and a second gain control parameter. When the controller sends the different parameter values of the adjustment parameter to the target correction module, if no other correction module has obtained a corresponding optimal parameter value, processing in step 301 may be as follows:

The controller sends a third group of different parameter values of the adjustment parameter to the target correction module, receives power detection information that is corresponding to each parameter value in the third group of different parameter values and that is sent by the power detector, and determines an optimal parameter value of the direct current compensation parameter based on the power detection information corresponding to each parameter value. The third group of different parameter values are one group of different parameter values of the adjustment parameter that include a preset parameter value of the second cross transfer parameter, a preset parameter value of the first gain control parameter, a preset parameter value of the second gain control parameter, and different parameter values of the direct current compensation parameter.

The controller sends a fourth group of different parameter values of the adjustment parameter to the target correction module, receives power detection information that is corresponding to each parameter value in the fourth group of different parameter values and that is sent by the power detector, and determines an optimal parameter value of the first gain control parameter and an optimal parameter value of the second cross transfer parameter based on the power detection information corresponding to each parameter value. The fourth group of different parameter values are one group of different parameter values of the adjustment parameter that include the optimal parameter value of the direct current compensation parameter, the preset parameter value of the second gain control parameter, different parameter values of the first gain control parameter, and different parameter values of the second cross transfer parameter.

The controller sends a fifth group of different parameter values of the adjustment parameter to the target correction module, receives power detection information that is corresponding to each parameter value in the fifth group of different parameter values and that is sent by the power detector, and determines an optimal parameter value of the second gain control parameter based on the power detection information corresponding to each parameter value. The fifth group of different parameter values are one group of different parameter values of the adjustment parameter that include the optimal parameter value of the direct current compensation parameter, the different parameter values of the first gain control parameter, different parameter values of the second gain control parameter, and the different parameter values of the second cross transfer parameter.

The third group of different parameter values may be the group of different parameter values of the adjustment parameter that include the preset parameter value of the first gain control parameter, the preset parameter value of the second gain control parameter, the preset parameter value of the second cross transfer parameter, and the different parameter values of the direct current compensation parameter. The fourth group of different parameter values may be the group of different parameter values of the adjustment parameter that include the preset parameter value of the second gain control parameter, the optimal parameter value of the direct current compensation parameter, the different parameter values of the first gain control parameter, and the different parameter values of the second cross transfer parameter. The fifth group of different parameter values may be the group of different parameter values of the adjustment parameter that include the optimal parameter value of the direct current compensation parameter, the different parameter values of the first gain control parameter, the different parameter values of the second gain control parameter, and the different parameter values of the second cross transfer parameter.

The different parameter values of the direct current compensation parameter are a plurality of parameter values obtained by performing adjustment based on a first preset step starting from a preset parameter value of the direct current compensation parameter. The different parameter values of the first gain control parameter are a plurality of parameter values obtained by performing adjustment based on a second preset step starting from the preset parameter value of the first gain control parameter, the different parameter values of the second cross transfer parameter are a plurality of parameter values obtained by performing adjustment based on a third preset step starting from the preset parameter value of the second cross transfer parameter, and the different parameter values of the second gain control parameter are a plurality of parameter values obtained by performing adjustment based on a sixth preset step starting from the preset parameter value of the second gain control parameter.

During implementation, the balance adjustment parameter may include the direct current compensation parameter, the gain control parameter, and the second cross transfer parameter. The gain control parameter may include the first gain control parameter and the second gain control parameter.

When the controller sends the different parameter values of the adjustment parameter to the target correction module, if no other correction module has obtained a corresponding optimal parameter value, a correction module whose adjustment parameter needs to be determined is the first correction module in the microwave transmitter. The controller may send the preset parameter value of the first gain control parameter, the preset parameter value of the second gain control parameter, the preset parameter value of the second cross transfer parameter, and one parameter value of the direct current compensation parameter to the target correction module each time, the target correction module may perform signal adjustment based on parameter values received each time, the power detector may detect power detection information corresponding to each parameter value of the direct current compensation parameter, and the controller receives the power detection information that is corresponding to each parameter value of the direct current compensation parameter and that is sent by the power detector. The controller may determine the optimal parameter value of the direct current compensation parameter based on the power detection information corresponding to each parameter value of the direct current compensation parameter.

The controller may send the preset parameter value of the second gain control parameter, the optimal parameter value of the direct current compensation parameter, one parameter value of the first gain control parameter, and one parameter value of the second cross transfer parameter to the target correction module each time, the target correction module may perform signal adjustment based on parameter values received each time, the power detector may detect power detection information corresponding to parameter values that are sent each time, and the controller receives the power detection information that is corresponding to the parameter values sent each time and that is sent by the power detector. The controller may determine the optimal parameter value of the first gain control parameter and the optimal parameter value of the second cross transfer parameter based on the power detection information corresponding to the parameter values that are sent each time.

The controller may send the optimal parameter value of the direct current compensation parameter, one parameter value of the second gain control parameter, one parameter value of the first gain control parameter, and one parameter value of the second cross transfer parameter to the target correction module each time, the target correction module may perform signal adjustment based on parameter values received each time, the power detector may detect power detection information corresponding to parameter values that are sent each time, and the controller receives the power detection information that is corresponding to the parameter values sent each time and that is sent by the power detector. The controller may determine the optimal parameter value of the second gain control parameter based on the power detection information corresponding to the parameter values that are sent each time.

In addition, the controller may determine the third group of different parameter values sent to the target correction module, and send the third group of different parameter values to the target correction module at a time. The target correction module may perform signal adjustment based on each parameter value in the third group of different parameter values each time. The power detector may detect the power detection information corresponding to each parameter value, and send the power detection information corresponding to each parameter value to the controller. The controller may determine the optimal parameter value of the direct current compensation parameter based on the power detection information corresponding to each parameter value. Further, the controller may determine the fourth group of different parameter values sent to the target correction module, and send the fourth group of different parameter values to the target correction module at a time. The target correction module may perform signal adjustment based on each parameter value in the fourth group of different parameter values each time. The power detector may detect the power detection information corresponding to each parameter value, and send the power detection information corresponding to each parameter value to the controller. The controller may determine the optimal parameter value of the first gain control parameter and the optimal parameter value of the second cross transfer parameter based on the power detection information corresponding to each parameter value. Further, the controller may determine the fifth group of different parameter values sent to the target correction module, and send the fifth group of different parameter values to the target correction module at a time. The target correction module may perform signal adjustment based on each parameter value in the fifth group of different parameter values each time. The power detector may detect the power detection information corresponding to each parameter value, and send the power detection information corresponding to each parameter value to the controller. The controller may determine the optimal parameter value of the second gain control parameter based on the power detection information corresponding to each parameter value.

Optionally, when the controller sends the different parameter values of the adjustment parameter to the target correction module, if no other correction module has obtained a corresponding optimal parameter value, processing in step 301 may be as follows:

The controller adjusts a parameter value of the direct current compensation parameter starting from a first initial parameter value preset for the direct current compensation parameter; sends parameter values of the adjustment parameter to the target correction module after each adjustment, where currently sent parameter values of the adjustment parameter include a second initial parameter value preset for the first gain control parameter, a fourth initial parameter value preset for the second gain control parameter, a third initial parameter value preset for the second cross transfer parameter, and a currently adjusted parameter value of the direct current compensation parameter; and receives one group of power detection information sent by the power detector and corresponding to the parameter values of the adjustment parameter that are obtained after each adjustment, calculates an average value of the group of power detection information, and determines that a parameter value that is of the direct current compensation parameter and that is corresponding to a minimum average value is the optimal parameter value of the direct current compensation parameter.

The controller adjusts a parameter value of the first gain control parameter starting from the second initial parameter value preset for the first gain control parameter and a parameter value of the second cross transfer parameter starting from the third initial parameter value preset for the second cross transfer parameter; sends parameter values of the adjustment parameter to the target correction module after each adjustment, where currently sent parameter values of the adjustment parameter include the optimal parameter value of the direct current compensation parameter, the fourth initial parameter value preset for the second gain control parameter, a currently adjusted parameter value of the first gain control parameter, and a currently adjusted parameter value of the second cross transfer parameter; and receives one group of power detection information sent by the power detector and corresponding to the parameter values of the adjustment parameter that are obtained after each adjustment, calculates a statistical variance of the group of power detection information, and determines that a parameter value of the first gain control parameter and a parameter value of the second cross transfer parameter that are corresponding to a minimum statistical variance are respectively the optimal parameter value of the first gain control parameter and the optimal parameter value of the second cross transfer parameter.

The controller adjusts a parameter value of the second gain control parameter starting from the fourth initial parameter value preset for the second gain control parameter, the parameter value of the first gain control parameter starting from the optimal parameter value of the first gain control parameter, and the parameter value of the second cross transfer parameter starting from the optimal parameter value of the second cross transfer parameter; sends parameter values of the adjustment parameter to the target correction module after each adjustment, where currently sent parameter values of the adjustment parameter include the optimal parameter value of the direct current compensation parameter, a currently adjusted parameter value of the second gain control parameter, the currently adjusted parameter value of the first gain control parameter, and the currently adjusted parameter value of the second cross transfer parameter; and receives one group of power detection information sent by the power detector and corresponding to the parameter values of the adjustment parameter that are obtained after each adjustment, calculates an average value of the group of power detection information, and determines that a square of a parameter value that is of the second gain control parameter and that is corresponding to a minimum average value is the optimal parameter value of the second gain control parameter.

During implementation, the controller may determine the first initial parameter value preset for the direct current compensation parameter, the second initial parameter value preset for the first gain control parameter, the fourth initial parameter value preset for the second gain control parameter, and the third initial parameter value preset for the second cross transfer parameter, where the adjustment parameter corresponding to the target correction module includes the direct current compensation parameter, the first gain control parameter, the second gain control parameter, and the second cross transfer parameter. The controller adjusts the parameter value of the direct current compensation parameter based on a first preset adjustment step starting from the first initial parameter value preset for the direct current compensation parameter, and sends the parameter values of the adjustment parameter to the target correction module after each adjustment. The currently sent parameter values of the adjustment parameter include the second initial parameter value preset for the first gain control parameter, the fourth initial parameter value preset for the second gain control parameter, the third initial parameter value preset for the second cross transfer parameter, and the currently adjusted parameter value of the direct current compensation parameter. The controller may receive one group of power detection information sent by the power detector and corresponding to a parameter value that is of the direct current compensation parameter and that is obtained after each adjustment, and calculate an average value of the group of power detection information, until an average value corresponding to a current adjustment is greater than an average value corresponding to a previous adjustment, and an average value corresponding to an adjustment before the previous adjustment is also greater than the average value corresponding to the previous adjustment. In this case, the controller determines that a parameter value that is of the direct current compensation parameter and that is obtained after the previous adjustment is the optimal parameter value of the direct current compensation parameter. For example, initial parameter values preset for gain control parameters a and c are respectively $a_0$ and $c_0$, a third initial parameter value preset for a second cross transfer parameter b is $b_0$, and first initial parameter values preset for direct current compensation parameters e and f are respectively $e_1$ and $f_1$. The controller may send $a_0$, $b_0$, $c_0$, $e_1$, and $f_1$ to the target correction module. The controller may receive one group of power detection information that is corresponding to $a_0$, $b_0$, $c_0$, $e_1$, and $f_1$ and that is sent by the power detector, calculate an average value of the group of power detection information, and then update $e_1$ and $f_1$ to $e_2$ and $f_2$ based on preset adjustment steps corresponding to e and f. The controller may receive one group of power detection information that is corresponding to $a_0$, $b_0$, $c_0$, $e_2$, and $f_2$ and that is sent by the power detector, and calculate an average value of the group of power detection information. If an average value, of one group of power detection information that is corresponding to $a_0$, $b_0$, $c_0$, $e_M$, and $f_M$ and that is sent by the power detector, calculated by the controller based on the group of power detection information is less than an average value of one group of power detection information corresponding to $a_0$, $b_0$, $c_0$, $e_N$, and $f_N$, and the average value of the group of power detection information corresponding to $a_0$, $b_0$, $c_0$, $e_M$, and $f_M$ is also less than an average value of one group of power detection information corresponding to $a_0$, $b_0$, $c_0$, $e_P$, and $f_P$, the controller determines that $e_M$ and $f_M$ are optimal parameter values of the direct current compensation parameters, where N=M-1, and P=M+1.

The controller may determine the second initial parameter value preset for the first gain control parameter, the fourth initial parameter value preset for the second gain control parameter, the third initial parameter value preset for the second cross transfer parameter, and the optimal parameter value of the direct current compensation parameter, where the adjustment parameter corresponding to the target correction module includes the first gain control parameter, the second gain control parameter, the second cross transfer parameter and the direct current compensation parameter. The controller adjusts the parameter value of the first gain control parameter based on a second preset adjustment step starting from the second initial parameter value preset for the first gain control parameter and the parameter value of the second cross transfer parameter based on a third preset adjustment step starting from the third initial parameter value preset for the second cross transfer parameter, and sends the parameter values of the adjustment parameter to the target correction module after each adjustment. The currently sent parameter values of the adjustment parameter include the optimal parameter value of the direct current compensation parameter, the fourth initial parameter value preset for the second gain control parameter, the currently adjusted parameter value of the first gain control parameter, and the currently adjusted parameter value of the second cross transfer parameter. The controller may receive one group of power detection information sent by the power detector and corresponding to parameter values that are obtained after each adjustment, and calculate a statistical variance of the group of power detection information, until a statistical variance corresponding to a current adjustment is greater than a statistical variance corresponding to a previous adjustment, and a statistical variance corresponding to an adjustment before the previous adjustment is also greater than the statistical variance corresponding to the previous adjustment. In this case, the controller determines that a parameter value of the first gain control parameter and a parameter value of the second cross transfer parameter that are obtained after the previous adjustment are respectively the optimal parameter value of the first gain control parameter and the optimal parameter value of the second cross transfer parameter. For example, the second preset adjustment step and the third preset adjustment step may be preset by a skilled person, and stored in the controller. The controller may determine optimal parameter value $e_M$ and $f_M$ of the direct current compensation parameter in the adjustment parameter, and determines a second initial parameter value $a_0$ preset for the first gain control parameter, a third initial parameter value $b_0$ preset for the second cross transfer parameter, and a fourth initial parameter value $c_0$ preset for the second gain control parameter. The controller may separately adjust $a_0$ and $b_0$ to $a_1$ and $b_1$ based on the second preset adjustment step and the third preset adjustment step, and the controller may send $a_1$, $b_1$, $c_0$, $e_M$, and $f_M$ to the target correction module. The controller may receive one group of power detection information that is corresponding to $a_1$, $b_1$, $c_0$, $e_M$, and $f_M$ and that is sent by the power detector, calculate a statistical variance of the group of power detection information, and then update $a_1$ and $b_1$ to $a_2$ and $b_2$ based on the second preset adjustment step and the third preset adjustment step that are respectively corresponding to $a_1$ and $b_1$. The controller may receive one group of power detection information that is corresponding to $a_2$, $b_2$, $c_0$, $e_M$, and $f_M$ and that is sent by the power detector, and calculate a statistical variance of the group of power detection information. If a statistical variance, of one group of power detection information that is corresponding to $a_M$, $b_M$, $c_0$, $e_M$, and $f_M$ and that is sent by the power detector, calculated by the controller based on the power detection information is less than a statistical variance of one group of power detection information corresponding to $a_N$, $b_N$, $c_0$, $e_M$, and $f_M$, and the statistical variance of the group of power detection information corresponding to $a_M$, $b_M$, $c_0$, $e_M$, and $f_M$ is also less than a statistical variance of one group of power detection information corresponding to ap, bp, $c_0$, ep, and fp, the controller determines that $a_M$ and $b_M$ are respectively the optimal parameter value of the first gain control parameter and the optimal parameter value of the second cross transfer parameter, where N=M-1, and P=M+1.

The controller may determine the fourth initial parameter value preset for the second gain control parameter, the optimal parameter value of the first gain control parameter, the optimal parameter value of the second cross transfer parameter, and the optimal parameter value of the direct current compensation parameter, where the adjustment parameter corresponding to the target correction module includes the second gain control parameter, the first gain control parameter, the second cross transfer parameter, and the direct current compensation parameter. The controller adjusts the parameter value of the first gain control parameter based on a fourth preset adjustment step starting from the optimal parameter value of the first gain control parameter, the parameter value of the second gain control parameter based on a sixth preset adjustment step starting from the fourth initial parameter value preset for the second gain control parameter, and the parameter value of the second cross transfer parameter based on a fifth preset adjustment step starting from the optimal parameter value of the second cross transfer parameter, and sends the parameter values of the adjustment parameter to the target correction module after each adjustment. The currently sent parameter values of the adjustment parameter include the optimal parameter value of the direct current compensation parameter, the currently adjusted parameter value of the second gain control parameter, the currently adjusted parameter value of the first gain control parameter, and the currently adjusted parameter value of the second cross transfer parameter. The controller may receive one group of power detection information sent by the power detector and corresponding to parameter values that are obtained after each adjustment, and calculate an average value of the group of power detection information, until an average value corresponding to a current adjustment is greater than an average value corresponding to a previous adjustment, and an average value corresponding to an adjustment before the previous adjustment is also greater than the average value corresponding to the previous adjustment. In this case, the controller determines that a square of a parameter value that is of the second gain control parameter and that is obtained after the previous adjustment is the optimal parameter value of the second gain control parameter. For example, the fourth preset adjustment step, the fifth preset adjustment step, and the sixth preset adjustment step may be preset by a skilled person, and stored in the controller. The controller may determine optimal parameter values $e_M$ and $f_M$ of the direct current compensation parameter in the adjustment parameter, and determine an optimal parameter value $a_M$ of the first gain control parameter, a fourth initial parameter value $c_0$ preset for the second gain control parameter, and an optimal parameter value $b_M$ of the second cross transfer parameter. The controller may separately adjust $a_M$ and $b_M$ to $a_{11}$ and $b_{11}$ based on the fourth preset adjustment step and the fifth preset adjustment step, and adjust $c_0$ to $c_1$ based on the sixth preset adjustment step. The controller may send $a_{11}$, $b_{11}$, $c_1$, $e_M$, and $f_M$ to the target correction module. The controller may receive one group of power detection information that is corresponding to $a_{11}$, $b_{11}$, $c_1$, $e_M$, and $f_M$ and that is sent by the power detector, calculate an average value of the group of power detection information, update $a_{11}$ and $b_{11}$ to $a_{12}$ and $b_{12}$ based on the fourth preset adjustment step and the fifth preset adjustment step that are respectively corresponding to $a_{11}$ and $b_{11}$, and adjust $c_1$ to $c_2$ based on the sixth preset adjustment step. The controller may receive one group of power detection information that is corresponding to $a_{12}$, $b_{12}$, $c_2$, $e_M$, and $f_M$ and that is sent by the power detector, and calculate an average value of the group of power detection information. If an average value, of one group of power detection information that is corresponding to $a_{1M}$, $b_{1M}$, $c_M$, $e_M$, and $f_M$ and that is sent by the power detector, calculated by the controller based on the group of power detection information is less than an average value of one group of power detection information corresponding to $a_{1N}$, $b_{1N}$, $c_N$, $e_M$, and $f_M$, and the average value of the group of power detection information corresponding to $a_{1M}$, $b_{1M}$, $c_M$, $e_M$, and $f_M$ is also less than an average value of one group of power detection information corresponding to $a_{1P}$, $b_{1P}$, cp, ep, and fp, the controller determines that a square of $c_P$ is the optimal parameter value of the second gain control parameter, where N=M-1, and P=M+1.

Optionally, when the balance adjustment parameter includes at least a direct current compensation parameter, processing in step 301 may be as follows:

The controller adjusts a parameter value of the direct current compensation parameter starting from a first initial parameter value preset for the direct current compensation parameter, sends parameter values of the adjustment parameter to the target correction module after each adjustment, receives one group of power detection information sent by the power detector and corresponding to the parameter values of the adjustment parameter that are obtained after each adjustment, calculates an average value of the group of power detection information, and determines that a parameter value that is of the direct current compensation parameter and that is corresponding to a minimum average value is an optimal parameter value of the direct current compensation parameter.

During implementation, the controller may determine the first initial parameter value preset for the direct current compensation parameter in the adjustment parameter corresponding to the target correction module, adjust the parameter value of the direct current compensation parameter based on a first preset adjustment step starting from the first initial parameter value preset for the direct current compensation parameter, and send the parameter values of the adjustment parameter to the target correction module after each adjustment. The controller may receive one group of power detection information sent by the power detector and corresponding to a parameter value that is of the direct current compensation parameter and that is obtained after each adjustment, and calculate an average value of the group of power detection information, until an average value corresponding to a current adjustment is greater than an average value corresponding to a previous adjustment, and an average value corresponding to an adjustment before the previous adjustment is also greater than the average value corresponding to the previous adjustment. In this case, the controller determines that a parameter value that is of the direct current compensation parameter and that is obtained after the previous adjustment is the optimal parameter value of the direct current compensation parameter. For example, first initial parameter values preset for direct current compensation parameters e and f are respectively $e_1$ and $f_1$. The controller may send $e_1$ and $f_1$ to the target correction module, and the controller may receive one group of power detection information that is corresponding to $e_1$ and $f_1$ and that is sent by the power detector, calculate an average value of the group of power detection information, and then update $e_1$ and $f_1$ to $e_2$ and $f_2$ based on preset adjustment steps corresponding to e and f. The controller may receive one group of power detection information that is corresponding to $e_2$ and $f_2$ and that is sent by the power detector, and calculate an average value of the group of power detection information. If an average value, of one group of power detection information that is corresponding to $e_M$ and $f_M$ and that is sent by the power detector, calculated by the controller based on the group of power detection information is less than an average value of one group of power detection information corresponding to $e_N$ and $f_N$, and the average value of the group of power detection information corresponding to $e_M$ and $f_M$ is also less than an average value of one group of power detection information corresponding to $e_P$ and $f_P$, the controller determines that $e_M$ and $f_M$ are optimal parameter values of the direct current compensation parameters, where N=M-1, and P=M+1.

Step 302: The controller sends the optimal parameter value to the target correction module.

During implementation, after determining the optimal parameter value corresponding to the target correction module, the controller may send the optimal parameter value to the target correction module.

Optionally, the balance adjustment parameter includes the direct current compensation parameter, the gain control parameter, and the second cross transfer parameter. When the adjustment parameter further includes the first cross transfer parameter, processing in step 302 may be as follows:

The controller sends the optimal parameter value of the direct current compensation parameter, the optimal parameter value of the gain control parameter, the optimal parameter value of the first cross transfer parameter, and the optimal parameter value of the second cross transfer parameter to the target correction module.

During implementation, after determining the optimal parameter value of the direct current compensation parameter, the optimal parameter value of the gain control parameter, the optimal parameter value of the first cross transfer parameter, and the optimal parameter value of the second cross transfer parameter, the controller may send the optimal parameter value of the direct current compensation parameter, the optimal parameter value of the gain control parameter, the optimal parameter value of the first cross transfer parameter, and the optimal parameter value of the second cross transfer parameter to the target correction module.

Optionally, when the controller sends the different parameter values of the adjustment parameter to the target correction module, if no other correction module has obtained a corresponding optimal parameter value, processing in step 302 may be as follows: The controller sends the optimal parameter value of the direct current compensation parameter, the optimal parameter value of the gain control parameter, and the optimal parameter value of the second cross transfer parameter to the target correction module.

During implementation, after determining the optimal parameter value of the direct current compensation parameter, the optimal parameter value of the gain control parameter, and the optimal parameter value of the second cross transfer parameter, the controller may send the optimal parameter value of the direct current compensation parameter, the optimal parameter value of the gain control parameter, and the optimal parameter value of the second cross transfer parameter to the target correction module.

Step 302 may be specifically implemented by a controller 2.

Step 303: The target correction module performs, based on the optimal parameter value, signal adjustment on an input I/Q signal.

During implementation, the target correction module receives the optimal parameter value sent by the controller, and performs, by using the optimal parameter value, signal adjustment on the input I/Q signal. In this way, after the target correction module adjusts the I/Q signal by using the optimal parameter value, the I/Q signal that is output after the I/Q signal passes through the target signal processing module is no longer unbalanced.

Optionally, the balance adjustment parameter includes the direct current compensation parameter, the gain control parameter, and the second cross transfer parameter. When the adjustment parameter further includes the first cross transfer parameter, processing in step 303 may be as follows:

The target correction module performs, based on the optimal parameter value of the direct current compensation parameter, the optimal parameter value of the gain control parameter, the optimal parameter value of the first cross transfer parameter, and the optimal parameter value of the second cross transfer parameter, signal adjustment on the input I/Q signal.

During implementation, the target correction module receives the optimal parameter value of the direct current compensation parameter, the optimal parameter value of the gain control parameter, the optimal parameter value of the first cross transfer parameter, and the optimal parameter value of the second cross transfer parameter that are sent by the controller. In a subsequent signal adjustment process, the target correction module may perform, by using the optimal parameter value of the direct current compensation parameter, the optimal parameter value of the gain control parameter, the optimal parameter value of the first cross transfer parameter, and the optimal parameter value of the second cross transfer parameter, signal adjustment on the input I/Q signal. After signal adjustment is performed on the input I/Q signal to the target correction module, the I/Q signal that is output after the I/Q signal passes through the target signal processing module has no imbalance impairment and has no rotation phase impairment. Optionally, when the controller sends the different parameter values of the adjustment parameter to the target correction module, if no other correction module has obtained a corresponding optimal parameter value, processing in step 303 may be as follows: The target correction module performs, base on the optimal parameter value of the direct current compensation parameter, the optimal parameter value of the gain control parameter, and the optimal parameter value of the second cross transfer parameter, signal adjustment on the input I/Q signal.

During implementation, the target correction module receives the optimal parameter value of the direct current compensation parameter, the optimal parameter value of the gain control parameter, and the optimal parameter value of the second cross transfer parameter that are sent by the controller. In a subsequent signal adjustment process, the target correction module may perform, by using the optimal parameter value of the direct current compensation parameter, the optimal parameter value of the gain control parameter, and the optimal parameter value of the second cross transfer parameter, signal adjustment on the input I/Q signal. After signal adjustment is performed on the input I/Q signal to the target correction module, the I/Q signal that is output after the I/Q signal passes through the target signal processing module has no imbalance impairment. Step 303 may be specifically implemented by a target correction module 3.

This embodiment of the present invention further provides a principle of signal adjustment performed in step 301.

The microwave transmitter has a plurality of signals, and each signal is corresponding to one correction module and one signal processing module. One transmit channel includes one correction module and one signal processing module, and optimal parameter values of adjustment parameters of correction modules are successively determined. Each time when determining an optimal parameter value of an adjustment parameter corresponding to one correction module, the microwave transmitter may enable a next transmit channel, and determine an optimal parameter value corresponding to a correction module in the transmit channel. To be specific, each time when an optimal parameter value of an adjustment parameter is determined, all transmit channels for which optimal parameter values of adjustment parameters corresponding to correction modules have been determined are enabled, and only one transmit channel for which an optimal parameter value of an adjustment parameter is not determined is enabled.

It is assumed that I signals and Q signals that are output by signal processing modules in a plurality of transmit channels and that have no I/Q imbalance impairment and have no rotation phase impairment are $I_0$ and $Q_0$ (optimal parameter values of adjustment parameters have been determined), and an I signal and a Q signal in a transmit channel for which an optimal parameter value of an adjustment parameter is currently being determined (that is, a currently enabled transmit channel) are I and Q. An I/Q signal that is output after the I/Q signal passes through a signal processing module has an imbalance impairment, and therefore the I signal and the Q signal respectively change to Im and Qm. An expression is:

$$\begin{bmatrix} Im \\ Qm \end{bmatrix} = \begin{bmatrix} 1 & sin(\theta) \\ 0 & cos(\theta) \end{bmatrix} \cdot \begin{bmatrix} 1 & 0 \\ 0 & g \end{bmatrix} \cdot \begin{bmatrix} I \\ Q \end{bmatrix} + \begin{bmatrix} Di \\ Dq \end{bmatrix} \quad (1)$$

I and Q represent an I/Q signal that has no impairment, g is a gain imbalance amount of the Q signal relative to the I signal, $\theta$ represents a phase error caused by a 90-degree phase shifter in a signal processing module, Di and Dq represents respective direct current components added by the signal processing module to the I signal and the Q signal, and Im and Qm are an I/Q signal that has an I/Q imbalance impairment.

An expression for a combined power in combined power detection information output by a signal processing module in a transmit channel for which an optimal parameter value of an adjustment parameter has been determined and combined power detection information output by a signal processing module in a currently enabled transmit channel is:

$$W = \left| z_n \right|^2 = \left( I_0 + I_m \right)^2 + \left( Q_0 + Q_m \right)^2 = I_0^2 + Q_0^2 + I_m{}^2 + Q_m{}^2 + 2I_0 I_m + 2Q_0 Q_m \quad (2)$$

In communication, a symmetric modulation scheme is usually used for I/Q modulation, and statistics for I signals and Q signals are separately collected. An average value of the I signals, an average value of the Q signals, and a statistical average value of a product of the I signals and the Q signals are 0, that is, $E\{I\} = E\{Q\} = E\{I \cdot Q\} = 0$, and $E\{I_0\} = E\{Q_0\} = E\{I_0 \cdot Q_0\} = 0$.

Based on the formula (2), an expression for an average value of the combined power W is:

$$E\{W\} = E\left\{\left| z_n \right|^2\right\} = E\left\{I_0{}^2\right\} + E\left\{Q_0{}^2\right\} + E\left\{I^2\right\} + g^2 E\left\{Q^2\right\} + E\left\{Di^2\right\} + E\left\{Dq^2\right\} \quad (3)$$

It can be learned from the formula (3) that, because a power average value of the I/Q signal is a constant that depends on the modulation scheme for the I/Q signal, the direct current components Di and Dq make the average value $E\{W\}$ of the powers W increase. Therefore, when inverse compensation is performed on the direct current components of the I/Q signal, the average value $E\{W\}$ becomes smaller. When the average value $E\{W\}$ reaches a minimum value, the direct current components are totally compensated, that is, Di=Dq=0. The direct current components of the I/Q signal are compensated by using a criterion of minimizing the average value $E\{W\}$, so that a direct current component that is spilled over in a channel that has an impairment can be adjusted.

After direct current compensation is completed, a combined power $W_d = |z_n|^2$ is transformed to:

$$W_d = \left| z_n \right|^2 = I_0^2 + Q_0^2 + I^2 + (gQ)^2 + 2I_0 \cdot I + 2(I + I_0) \cdot gQ \cdot \sin(\theta) + 2Q_0 \cdot gQ \cdot \cos(\theta) \quad (4)$$

In this case, a statistical variance of the combined power $W_d$ is:

$$V\{W_d\} = E\left\{\left(W_d - E\{W_d\}\right)^2\right\} = V\{I_0\} + V\{Q_0\} + V\{I\} + g^4 \cdot V\{Q\} + 4E\left\{(I \cdot I_0)^2\right\}$$
$$+ 4g^2 \cdot E\left\{(Q \cdot Q_0)^2\right\} + 4g^2 \cdot E\left\{Q^2\left((I + I_0)^2 - Q_0^2\right)\right\} \cdot \sin^2(\theta) \quad (5)$$

On a right side of an equation in the formula (5), except a last factor, the first six factors are constants related to the modulation scheme for the I/Q signal. However, $E\{Q^2((I+I_0)^2-Q_0^2)\}$ in the last factor is a constant greater than 0. Therefore, when phase imbalance of the I/Q signal is compensated by using a criterion of minimizing $V\{W_d\}$, a phase error $\theta$ of the Q signal can return to 0.

After the phase compensation, a combined power $W_p = |z_n|^2$ is further transformed to:

$$W_p = \left| z_n \right|^2 = I_0^2 + Q_0^2 + I^2 + (gQ)^2 + 2I_0 \cdot I + 2Q_0 \cdot gQ \quad (6)$$

In this case, a statistical average value of the combined power $W_p$ is:

$$E\{W_p\} = E\left\{\left| z_n \right|^2\right\} = E\left\{I_0{}^2\right\} + E\left\{Q_0{}^2\right\} + E\left\{I^2\right\} + g^2 E\left\{Q^2\right\} \quad (7)$$

In communication, a symmetric modulation scheme is usually used for an I/Q signal. Powers of the I signal and the Q signal are the same, and are denoted as A, that is,

$E\{I^2\} = E\{Q^2\} = A$. Symmetric compensation is performed on the I signal and the Q signal, to be specific, a gain compensation factor of the I signal is x, and a gain compensation factor of the Q signal is 1/x. After the compensation, the statistical average value of the power in the formula (7) is:

$$E\left\{W_p\right\} = E\left\{\left|z_n\right|^2\right\} = E\left\{I_0^2\right\} + E\left\{Q_0^2\right\} + \left(x^2 + \frac{g^2}{x^2}\right)A \qquad (8)$$

When imbalance correction is performed on the I/Q gain, on a right side of an equation in the formula (8), the first two factors are constants related to the modulation scheme for the I/Q signal, and do not affect a derivation operation of the next two factors. x is considered as a variable, and x has a minimum value for a function in the formula (8), and the minimum value is obtained when $x = \sqrt{g}$. In this case, gains of both the I signal and the Q signal are $\sqrt{g}$, and the gains are balanced. Therefore, when the statistical average value of the power $W_p$ is minimized by adjusting the compensation factor x, imbalance correction on the I/Q signal gain can be completed. Then, to restore a reference gain of the I signal, only the gain of the Q signal is adjusted. A gain correction factor of the I signal may be set to 1, and a square of the determined optimal gain correction factor 1/x is compensated to the gain of the Q signal, to eliminate impact from an imbalance coefficient g, so that the gain of the Q signal is the same as the reference gain of the I signal.

In this way, after the imbalance correction is performed on the currently enabled transmit channel, imbalance correction on the I/Q signal that is output has been completed.

In addition, when a modulated signal is transmitted in a radio frequency circuit in the microwave transmitter, delays of a transmission path and a circuit component may cause a phase deviation to the signal. As shown in a formula (9), the phase deviation is reflected as I/Q signal rotation.

$$\begin{bmatrix} Ir \\ Qr \end{bmatrix} = \begin{bmatrix} cos(\phi) & -sin(\phi) \\ sin(\phi) & cos(\phi) \end{bmatrix} \cdot \begin{bmatrix} I \\ Q \end{bmatrix} \qquad (9)$$

I and Q represent an original I/Q signal, $\phi$ represents a rotation phase caused by the phase deviation, and Ir and Qr are an I/Q signal obtained after rotation.

It is assumed that I signals and Q signals in two transmit channels (a transmit channel 1 and a transmit channel 2) are $I_1$ and $Q_1$, the signals in the transmit channel 1 have no phase rotation, and the signals in the transmit channel 2 have phase rotation of an angle $\phi$ relative to those in the transmit channel 1. It can be learned from the formula (2) that, in this case, the combined power W = $|z_n|^2$ may be represented as:

$$W = \left|z_n\right|^2 = \left(I_1 + I_r\right)^2 + \left(Q_1 + Q_r\right)^2 = 2I_1^2 + 2Q_1^2 + 2\left(I_1^2 + Q_1^2\right)cos(\phi) \qquad (10)$$

It can be learned from the formula (10) that, when $\phi$=0, to be specific, when phases of the signals in the two transmit channels are completely the same, the combined power W reaches a maximum value. Therefore, a phase of the transmit channel 2 is compensated by using a criterion of maximizing W, so that rotation phase correction between the transmit channels can be implemented.

In this embodiment of the present invention, the microwave transmitter includes the power detector, the controller, the at least one correction module, and the at least one signal processing module. The signal input end of each signal processing module is electrically connected to a signal output end of one correction module, and the controller is separately electrically connected to a control end of each correction module and the power detector. The power detector may be configured to: detect the power detection information of the in-phase/quadrature I/Q signal output by the signal processing module, and send the power detection information of the I/Q signal to the controller. The controller may send the different parameter values of the adjustment parameter to the target correction module, receive the power detection information detected by the power detector, and determine the optimal parameter value of the adjustment parameter based on the received power detection information. In this way, when the microwave transmitter sends a plurality of I/Q signals at the same time, only one correction module is disposed for each I/Q signal. In one microwave transmitter, only one power detector and one controller need to be disposed to implement imbalance adjustment, without a need to dispose a plurality of estimation modules and a plurality of envelope detectors. Therefore, a structure of the microwave transmitter is relatively simple.

Based on a same technical concept, an embodiment of the present invention further provides a microwave transmitter. As shown in FIG. 1, the microwave transmitter includes a power detector 1, a controller 2, at least one correction module 3, and at least one signal processing module 4. A signal input end of each signal processing module 4 is electrically connected to a signal output end of one correction module 3, and the controller 2 is separately electrically connected to a control end of each correction module 3 and the power detector 1. The controller 1 may be configured to perform step 301 and step 302, and the correction module 3 may be configured to perform step 303. A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc. The foregoing descriptions are merely example embodiments of the present invention, but are not intended to limit the present invention. Any modification, equivalent replacement, and improvement shall fall within the protection scope of the attached claims as covered under Art. 69 of the EPC protocol.

**Claims**

1.   A microwave transmitter, wherein the microwave transmitter comprises a power detector (1), a controller (2), at least two correction modules (3), and at least two signal processing modules (4), wherein

      a) a signal input end of each signal processing module (4) is electrically connected to a signal output end of a corresponding correction module (3), and the controller (2) is separately electrically connected to a control end of each correction module (3) and the power detector (1);
      b) the power detector (1) is configured to: detect an in-phase/quadrature, I/Q, signal output by any one of the at least two signal processing modules (4), to obtain power detection information, and send the power detection information of the I/Q signal to the controller (2);
      c) the controller (2) is configured to: send different parameter values of an adjustment parameter to a target correction module (3), receive power detection information that is corresponding to each parameter value and that is sent by the power detector (1), determine an optimal parameter value corresponding to the target correction module (3) from the parameter values based on the power detection information corresponding to each parameter value, and send the optimal parameter value to the target correction module; and
      d) the target correction module (3) is configured to: perform, based on the parameter values of the adjustment parameter that are sent by the controller (2), signal adjustment on an input I/Q signal, and send the adjusted I/Q signal to a target signal processing module (4) connected to the target correction module (3), wherein the received power detection information is power detection information of an I/Q signal output by the target signal processing module (4) when the target correction module (3) performs signal adjustment based on each parameter value sent by the controller (2), the target signal processing module (4) is a signal processing module (4) electrically connected to the target correction module (3), the adjustment parameter comprises at least a balance adjustment parameter, and the target correction module (3) is any one of the at least two correction modules.

2.   The microwave transmitter according to claim 1, wherein when the controller (2) sends the different parameter values of the adjustment parameter to the target correction module (3), if another correction module (3) has obtained a corresponding optimal parameter value and is in a working state of performing, based on the optimal parameter value, signal adjustment on the input I/Q signal, the adjustment parameter further comprises a first cross transfer parameter; and
      the controller (2) is configured to: send the different parameter values of the adjustment parameter to the target correction module (3), receive combined power detection information that is corresponding to each parameter value and that is sent by the power detector (1), determine the optimal parameter value from the parameter values based on the combined power detection information corresponding to each parameter value, and send the optimal parameter value to the target correction module (3), wherein the combined power detection information corresponding to each parameter value is power detection information obtained after power detection information of an I/Q signal output, when the another correction module (3) performs signal adjustment based on the corresponding optimal parameter value, by a signal processing module (4) connected to the another correction module (3) is added to power detection information of an I/Q signal output by the target signal processing module (4) when the target correction module (3) performs signal adjustment based on each parameter value.

3.   The microwave transmitter according to claim 2, wherein the balance adjustment parameter comprises a direct current compensation parameter, a gain control parameter, and a second cross transfer parameter.

4. The microwave transmitter according to claim 3, wherein the controller (2) is configured to:

send a first group of different parameter values of the adjustment parameter to the target correction module (3), receive combined power detection information that is corresponding to each parameter value in the first group of different parameter values and that is sent by the power detector (1), and determine an optimal parameter value of the direct current compensation parameter based on the combined power detection information corresponding to each parameter value, wherein the first group of different parameter values are one group of different parameter values of the adjustment parameter that comprise a preset parameter value of the gain control parameter, a preset parameter value of the first cross transfer parameter, a preset parameter value of the second cross transfer parameter, and different parameter values of the direct current compensation parameter;

send a second group of different parameter values of the adjustment parameter to the target correction module (3), receive combined power detection information that is corresponding to each parameter value in the second group of different parameter values and that is sent by the power detector (1), and determine an optimal parameter value of the gain control parameter, an optimal parameter value of the first cross transfer parameter, and an optimal parameter value of the second cross transfer parameter based on the combined power detection information corresponding to each parameter value, wherein the second group of different parameter values are one group of different parameter values of the adjustment parameter that consist of the optimal parameter value of the direct current compensation parameter, different parameter values of the gain control parameter, different parameter values of the first cross transfer parameter, and different parameter values of the second cross transfer parameter; and

send the optimal parameter value of the direct current compensation parameter, the optimal parameter value of the gain control parameter, the optimal parameter value of the first cross transfer parameter, and the optimal parameter value of the second cross transfer parameter to the target correction module.

5. The microwave transmitter according to claim 1, wherein the balance adjustment parameter comprises a direct current compensation parameter, a gain control parameter, and a second cross transfer parameter, and the gain control parameter comprises a first gain control parameter and a second gain control parameter;

when the controller (2) sends the different parameter values of the adjustment parameter to the target correction module (3), if no other correction module (3) has obtained a corresponding optimal parameter value, the controller (2) is configured to:

send a third group of different parameter values of the adjustment parameter to the target correction module (3), receive power detection information that is corresponding to each parameter value in the third group of different parameter values and that is sent by the power detector (1), and determine an optimal parameter value of the direct current compensation parameter based on the power detection information corresponding to each parameter value, wherein the third group of different parameter values are one group of different parameter values of the adjustment parameter that consist of a preset parameter value of the second cross transfer parameter, a preset parameter value of the first gain control parameter, a preset parameter value of the second gain control parameter, and different parameter values of the direct current compensation parameter;

send a fourth group of different parameter values of the adjustment parameter to the target correction module (3), receive power detection information that is corresponding to each parameter value in the fourth group of different parameter values and that is sent by the power detector (1), and determine an optimal parameter value of the first gain control parameter and an optimal parameter value of the second cross transfer parameter based on the power detection information corresponding to each parameter value, wherein the fourth group of different parameter values are one group of different parameter values of the adjustment parameter that consist of the optimal parameter value of the direct current compensation parameter, the preset parameter value of the second gain control parameter, different parameter values of the first gain control parameter, and different parameter values of the second cross transfer parameter; and

send a fifth group of different parameter values of the adjustment parameter to the target correction module (3), receive power detection information that is corresponding to each parameter value in the fifth group of different parameter values and that is sent by the power detector (1), and determine an optimal parameter value of the second gain control parameter based on the power detection information corresponding to each parameter value, wherein the fifth group of different parameter values are one group of different parameter values of the adjustment parameter that consist of the optimal parameter value of the direct current compensation parameter, the different parameter values of the first gain control parameter, different parameter values of the second gain control parameter, and the different parameter values of the second cross transfer parameter.

**6.** The microwave transmitter according to claim 5, wherein the controller (2) is configured to:

adjust a parameter value of the direct current compensation parameter starting from a first initial parameter value preset for the direct current compensation parameter; send parameter values of the adjustment parameter to the target correction module (3) after each adjustment, wherein currently sent parameter values of the adjustment parameter comprise a second initial parameter value preset for the first gain control parameter, a fourth initial parameter value preset for the second gain control parameter, a third initial parameter value preset for the second cross transfer parameter, and a currently adjusted parameter value of the direct current compensation parameter; and receive one group of power detection information sent by the power detector (1) and corresponding to the parameter values of the adjustment parameter that are obtained after each adjustment, calculate an average value of the group of power detection information, and determine that a parameter value that is of the direct current compensation parameter and that is corresponding to a minimum average value is the optimal parameter value of the direct current compensation parameter;

adjust a parameter value of the first gain control parameter starting from the second initial parameter value preset for the first gain control parameter and a parameter value of the second cross transfer parameter starting from the third initial parameter value preset for the second cross transfer parameter; send parameter values of the adjustment parameter to the target correction module (3) after each adjustment, wherein currently sent parameter values of the adjustment parameter comprise the optimal parameter value of the direct current compensation parameter, the fourth initial parameter value preset for the second gain control parameter, a currently adjusted parameter value of the first gain control parameter, and a currently adjusted parameter value of the second cross transfer parameter; and receive one group of power detection information sent by the power detector (1) and corresponding to the parameter values of the adjustment parameter that are obtained after each adjustment, calculate a statistical variance of the group of power detection information, and determine that a parameter value of the first gain control parameter and a parameter value of the second cross transfer parameter that are corresponding to a minimum statistical variance are respectively the optimal parameter value of the first gain control parameter and the optimal parameter value of the second cross transfer parameter; and adjust a parameter value of the second gain control parameter starting from the fourth initial parameter value preset for the second gain control parameter, the parameter value of the first gain control parameter starting from the optimal parameter value of the first gain control parameter, and the parameter value of the second cross transfer parameter starting from the optimal parameter value of the second cross transfer parameter; send parameter values of the adjustment parameter to the target correction module (3) after each adjustment, wherein currently sent parameter values of the adjustment parameter comprise the optimal parameter value of the direct current compensation parameter, a currently adjusted parameter value of the second gain control parameter, the currently adjusted parameter value of the first gain control parameter, and the currently adjusted parameter value of the second cross transfer parameter; and receive one group of power detection information sent by the power detector (1) and corresponding to the parameter values of the adjustment parameter that are obtained after each adjustment, calculate an average value of the group of power detection information, and determine that a square of a parameter value that is of the second gain control parameter and that is corresponding to a minimum average value is the optimal parameter value of the second gain control parameter.

**7.** The microwave transmitter according to claim 1, wherein the balance adjustment parameter comprises at least a direct current compensation parameter; and
the controller (2) is configured to:
adjust a parameter value of the direct current compensation parameter starting from a first initial parameter value preset for the direct current compensation parameter, send parameter values of the adjustment parameter to the target correction module (3) after each adjustment, receive one group of power detection information sent by the power detector (1) and corresponding to the parameter values of the adjustment parameter that are obtained after each adjustment, calculate an average value of the group of power detection information, and determine that a parameter value that is of the direct current compensation parameter and that is corresponding to a minimum average value is an optimal parameter value of the direct current compensation parameter.

**8.** The microwave transmitter according to claim 1, wherein the microwave transmitter further comprises a phase detector and at least one rotation correction module; and
a signal output end of each rotation correction module (3) is electrically connected to a signal input end of one correction module (3), the phase detector is electrically connected to a signal output end of each signal processing module (4), and the phase detector is electrically connected to a control end of each rotation correction module.

**9.** A signal adjustment method, wherein the method is applied to a microwave transmitter, the microwave transmitter comprises a power detector (1), a controller (2), at least two correction modules (3), and at least two signal processing modules (4), a signal input end of each signal processing module (4) is electrically connected to a signal output end of a corresponding correction module (3), the controller (2) is separately electrically connected to a control end of each correction module (3) and the power detector (1), and the method comprises:

a) sending (310), by the controller (2), different parameter values of an adjustment parameter to a target correction module (3), receiving power detection information that is corresponding to each parameter value and that is sent by the power detector (1), and determining an optimal parameter value corresponding to the target correction module (3) from the parameter values based on the power detection information corresponding to each parameter value;

b) sending (302), by the controller (2), the optimal parameter value to the target correction module; and

c) performing (303), by the target correction module (3) based on the optimal parameter value, signal adjustment on an input in-phase/quadrature, I/Q, signal, wherein

d) the received power detection information is power detection information of an I/Q signal output by a target signal processing module (4) when the target correction module (3) performs signal adjustment based on each parameter value sent by the controller (2), the target signal processing module (4) is a signal processing module (4) electrically connected to the target correction module (3), the adjustment parameter comprises at least a balance adjustment parameter, and the target correction module (3) is any one of the at least two correction modules.

10. The method according to claim 9, wherein when the controller (2) sends the different parameter values of the adjustment parameter to the target correction module (3), if another correction module (3) has obtained a corresponding optimal parameter value and is in a working state of performing, based on the optimal parameter value, signal adjustment on the input I/Q signal, the adjustment parameter further comprises a first cross transfer parameter; and

the receiving, by the controller (2), power detection information that is corresponding to each parameter value and that is sent by the power detector (1), and determining an optimal parameter value corresponding to the target correction module (3) from the parameter values based on the power detection information corresponding to each parameter value comprises:

receiving, by the controller (2), combined power detection information that is corresponding to each parameter value and that is sent by the power detector (1), and determining the optimal parameter value from the parameter values based on the combined power detection information corresponding to each parameter value, wherein the combined power detection information corresponding to each parameter value is power detection information obtained after power detection information of an I/Q signal output, when the another correction module (3) performs signal adjustment based on the corresponding optimal parameter value, by a signal processing module (4) connected to the another correction module (3) is added to power detection information of an I/Q signal output by the target signal processing module (4) when the target correction module (3) performs signal adjustment based on each parameter value.

11. The method according to claim 10, wherein the balance adjustment parameter comprises a direct current compensation parameter, a gain control parameter, and a second cross transfer parameter.

12. The method according to claim 11, wherein the sending, by the controller (2), different parameter values of an adjustment parameter to a target correction module (3), receiving combined power detection information that is corresponding to each parameter value and that is sent by the power detector (1), and determining the optimal parameter value from the parameter values based on the combined power detection information corresponding to each parameter value comprises:

sending, by the controller (2), a first group of different parameter values of the adjustment parameter to the target correction module (3), receiving combined power detection information that is corresponding to each parameter value in the first group of different parameter values and that is sent by the power detector (1), and determining an optimal parameter value of the direct current compensation parameter based on the combined power detection information corresponding to each parameter value, wherein the first group of different parameter values are one group of different parameter values of the adjustment parameter that consist of a preset parameter value of the gain control parameter, a preset parameter value of the first cross transfer parameter, a preset parameter value of the second cross transfer parameter, and different parameter values of the direct current compensation parameter; and

sending, by the controller (2), a second group of different parameter values of the adjustment parameter to the target correction module (3), receiving combined power detection information that is corresponding to each parameter value in the second group of different parameter values and that is sent by the power detector (1), and determining an optimal parameter value of the gain control parameter, an optimal parameter value of the first cross transfer parameter, and an optimal parameter value of the second cross transfer parameter based on the combined power detection information corresponding to each parameter value, wherein the second group of different parameter values are one group of different parameter values of the adjustment parameter that consist of the optimal parameter value of the direct current compensation parameter, different parameter values of the gain control parameter, different parameter values of the first cross transfer parameter, and different parameter values of the second cross transfer parameter.

13. The method according to claim 12, wherein the sending, by the controller (2), the optimal parameter value to the target correction module (3) comprises:
sending, by the controller (2), the optimal parameter value of the direct current compensation parameter, the optimal parameter value of the gain control parameter, the optimal parameter value of the first cross transfer parameter, and the optimal parameter value of the second cross transfer parameter to the target correction module.

14. The method according to claim 13, wherein the performing, by the target correction module (3) based on the optimal parameter value, signal adjustment on an input I/Q signal comprises:
performing, by the target correction module (3) based on the optimal parameter value of the direct current compensation parameter, the optimal parameter value of the gain control parameter, the optimal parameter value of the first cross transfer parameter, and the optimal parameter value of the second cross transfer parameter, signal adjustment on the input I/Q signal.

15. The method according to claim 9, wherein the balance adjustment parameter comprises a direct current compensation parameter, a gain control parameter, and a second cross transfer parameter, and the gain control parameter comprises a first gain control parameter and a second gain control parameter;
when the controller (2) sends the different parameter values of the adjustment parameter to the target correction module (3), if no other correction module (3) has obtained a corresponding optimal parameter value, the sending, by the controller (2), different parameter values of an adjustment parameter to a target correction module (3), receiving power detection information that is corresponding to each parameter value and that is sent by the power detector (1), and determining an optimal parameter value corresponding to the target correction module (3) from the parameter values based on the power detection information corresponding to each parameter value comprises:

sending a third group of different parameter values of the adjustment parameter to the target correction module (3), receiving power detection information that is corresponding to each parameter value in the third group of different parameter values and that is sent by the power detector (1), and determining an optimal parameter value of the direct current compensation parameter based on the power detection information corresponding to each parameter value, wherein the third group of different parameter values are one group of different parameter values of the adjustment parameter that consist of a preset parameter value of the second cross transfer parameter, a preset parameter value of the first gain control parameter, a preset parameter value of the second gain control parameter, and different parameter values of the direct current compensation parameter;
sending a fourth group of different parameter values of the adjustment parameter to the target correction module (3), receiving power detection information that is corresponding to each parameter value in the fourth group of different parameter values and that is sent by the power detector (1), and determining an optimal parameter value of the first gain control parameter and an optimal parameter value of the second cross transfer parameter based on the power detection information corresponding to each parameter value, wherein the fourth group of different parameter values are one group of different parameter values of the adjustment parameter that consist of the optimal parameter value of the direct current compensation parameter, the preset parameter value of the second gain control parameter, different parameter values of the first gain control parameter, and different parameter values of the second cross transfer parameter; and
sending a fifth group of different parameter values of the adjustment parameter to the target correction module (3), receiving power detection information that is corresponding to each parameter value in the fifth group of different parameter values and that is sent by the power detector (1), and determining an optimal parameter value of the second gain control parameter based on the power detection information corresponding to each parameter value, wherein the fifth group of different parameter values are one group of different parameter values of the adjustment parameter that consist of the optimal parameter value of the direct current compensation parameter, the different parameter values of the first gain control parameter, different parameter values of the second gain control parameter, and the different parameter values of the second cross transfer parameter; and

the sending, by the controller (2), the optimal parameter value to the target correction module (3) comprises:

sending, by the controller (2), the optimal parameter value of the direct current compensation parameter, the optimal parameter values of the gain control parameters, and the optimal parameter value of the second cross transfer parameter to the target correction module; and
the performing, by the target correction module (3) based on the optimal parameter value, signal adjustment on an input I/Q signal comprises:
performing, by the target correction module (3) based on the optimal parameter value of the direct current compensation parameter, the optimal parameter values of the gain control parameters, and the optimal parameter value of the second cross transfer parameter, signal adjustment on the input I/Q signal.


**Patentansprüche**

1. Mikrowellensender, wobei der Mikrowellensender einen Leistungsdetektor (1), einen Controller (2), mindestens zwei Korrekturmodule (3) und mindestens zwei Signalverarbeitungsmodule (4) umfasst, wobei

a) ein Signaleingangsende von jedem Signalverarbeitungsmodul (4) elektrisch mit einem Signalausgangsende eines entsprechenden Korrekturmoduls (3) verbunden ist und der Controller (2) separat elektrisch mit einem Steuerende von jedem Korrekturmodul (3) und dem Leistungsdetektor (1) verbunden ist;
b) der Leistungsdetektor (1) ausgelegt ist zum: Detektieren eines phasenrichtigen/Quadratur-Signals bzw. I/Q-Signals, das durch eines der mindestens zwei Signalverarbeitungsmodule (4) ausgegeben wird, um Leistungsdetektionsinformationen zu erhalten, und Senden der Leistungsdetektionsinformationen des I/Q-Signals an den Controller (2);
c) der Controller (2) ausgelegt ist zum: Senden verschiedener Parameterwerte eines Abgleichparameters an ein Ziel-Korrekturmodul (3), Empfangen von Leistungsdetektionsinformationen, die jedem Parameterwert entsprechen und die durch den Leistungsdetektor (1) gesendet wurden, Bestimmen eines optimalen Parameterwerts, der dem Ziel-Korrekturmodul (3) entspricht, aus den Parameterwerten, basierend auf den Leistungsdetektionsinformationen, die jedem Parameterwert entsprechen, und Senden des optimalen Parameterwerts an das Ziel-Korrekturmodul; und
d) das Ziel-Korrekturmodul (3) ausgelegt ist zum: Durchführen, basierend auf den Parameterwerten des Abgleichparameters, die durch den Controller (2) gesendet wurden, von Signalabgleich an einem eingegebenen I/Q-Signal und Senden des abgeglichenen I/Q-Signals an ein Ziel-Signalverarbeitungsmodul (4), das mit dem Ziel-Korrekturmodul (3) verbunden ist, wobei die empfangenen Leistungsdetektionsinformationen Leistungsdetektionsinformationen eines durch das Ziel-Signalverarbeitungsmodul (4) ausgegebenen I/Q-Signals sind, wenn das Ziel-Korrekturmodul (3) Signalabgleich basierend auf jedem durch den Controller (2) gesendeten Parameterwert durchführt, wobei das Ziel-Signalverarbeitungsmodul (4) ein mit dem Ziel-Korrekturmodul (3) elektrisch verbundenes Signalverarbeitungsmodul (4) ist, der Abgleichparameter zumindest einen Balance-Abgleichparameter umfasst und das Ziel-Korrekturmodul (3) ein beliebiges der mindestens zwei Korrekturmodule ist.

2. Mikrowellensender nach Anspruch 1, wobei, wenn der Controller (2) die verschiedenen Parameterwerte des Abgleichparameters an das Ziel-Korrekturmodul (3) sendet, falls ein anderes Korrekturmodul (3) einen entsprechenden optimalen Parameterwert erhalten hat und sich in einem Arbeitszustand des Durchführens, basierend auf dem optimalen Parameterwert, von Signalabgleich auf das I/Q-Signal befindet, der Abgleichparameter ferner einen ersten Kreuzübertragungsparameter umfasst; und
der Controller (2) ausgelegt ist zum: Senden der verschiedenen Parameterwerte des Abgleichparameters an das Ziel-Korrekturmodul (3), Empfangen von kombinierten Leistungsdetektionsinformationen, die jedem Parameterwert entsprechen und die durch den Leistungsdetektor (1) gesendet wurden, Bestimmen des optimalen Parameterwerts aus den Parameterwerten basierend auf den kombinierten Leistungsdetektionsinformationen, die jedem der Parameterwerte entsprechen, und Senden des optimalen Parameterwerts an das Ziel-Korrekturmodul (3), wobei die jedem Parameterwert entsprechenden kombinierten Leistungsdetektionsinformationen Leistungsdetektionsinformationen sind, erhalten aus Leistungsdetektionsinformationen eines I/Q-Signals, Ausgegeben durch ein Signalverarbeitungsmodul (4), verbunden mit dem anderen Korrekturmodul (3), wenn das andere Korrekturmodul (3) basierend auf dem entsprechenden optimalen Parameterwert Signalabgleich durchführt, die zu Leistungsdetektionsinformationen eines I/Q-Signals hinzugefügt werden, Ausgegeben durch das Ziel-Signalverarbeitungsmodul (4), wenn das Ziel-Korrekturmodul (3) basierend auf jedem Parameterwert Signalabgleich durchführt.

**3.** Mikrowellensender nach Anspruch 2, wobei der Balance-Abgleichparameter einen Gleichstromkompensationsparameter, einen Gewinnsteuerungsparameter und einen zweiten Kreuzübertragungsparameter umfasst.

**4.** Mikrowellensender nach Anspruch 3, wobei der Controller (2) ausgelegt ist zum:

Senden einer ersten Gruppe von verschiedenen Parameterwerten des Abgleichparameters an das Ziel-Korrekturmodul (3), Empfangen von kombinierten Leistungsdetektionsinformationen, die jedem Parameterwert in der ersten Gruppe von verschiedenen Parameterwerten entsprechen und die durch den Leistungsdetektor (1) gesendet wurden, und Bestimmen eines optimalen Parameterwerts des Gleichstromkompensationsparameters basierend auf den kombinierten Leistungsdetektionsinformationen, die jedem Parameterwert entsprechen, wobei die erste Gruppe von verschiedenen Parameterwerten eine Gruppe von verschiedenen Parameterwerten des Abgleichparameters ist, die einen voreingestellten Parameterwert des Gewinnsteuerparameters, einen voreingestellten Parameterwert des ersten Kreuzübertragungsparameters, einen voreingestellten Parameterwert des zweiten Kreuzübertragungsparameters und verschiedene Parameterwerte des Gleichstromkompensationsparameters umfasst;
Senden einer zweiten Gruppe von verschiedenen Parameterwerten des Abgleichparameters an das Ziel-Korrekturmodul (3), Empfangen von kombinierten Leistungsdetektionsinformationen, die jedem Parameterwert in der zweiten Gruppe von verschiedenen Parameterwerten entsprechen und die durch den Leistungsdetektor (1) gesendet wurden, und Bestimmen eines optimalen Parameterwerts des Gewinnsteuerparameters, eines optimalen Parameterwerts des ersten Kreuzübertragungsparameters und eines optimalen Parameterwerts des zweiten Kreuzübertragungsparameters basierend auf den kombinierten Leistungsdetektionsinformationen, die jedem Parameterwert entsprechen, wobei die zweite Gruppe von verschiedenen Parameterwerten eine Gruppe von verschiedenen Parameterwerten des Abgleichparameters ist, die aus dem optimalen Parameterwert des Gleichstromkompensationsparameters, verschiedenen Parameterwerten des Gewinnsteuerparameters, verschiedenen Parameterwerten des ersten Kreuzübertragungsparameters, verschiedenen Parameterwerten des zweiten Kreuzübertragungsparameters besteht; und
Senden des optimalen Parameterwerts des Gleichstromkompensationsparameters, des optimalen Parameterwerts des Gewinnsteuerparameters, des optimalen Parameterwerts des ersten Kreuzübertragungsparameters und des optimalen Parameterwerts des zweiten Kreuzübertragungsparameters an das Ziel-Korrekturmodul.

**5.** Mikrowellensender nach Anspruch 1, wobei der Balance-Abgleichparameter einen Gleichstromkompensationsparameter, einen Gewinnsteuerparameter und einen zweiten Kreuzübertragungsparameter umfasst, und der Gewinnsteuerparameter einen ersten Gewinnsteuerparameter und einen zweiten Gewinnsteuerparameter umfasst; wenn der Controller (2) die verschiedenen Parameterwerte des Abgleichparameters an das Ziel-Korrekturmodul (3) sendet, falls kein anderes Korrekturmodul (3) einen entsprechenden optimalen Parameterwert erhalten hat, der Controller (2) ausgelegt ist zum:

Senden einer dritten Gruppe von verschiedenen Parameterwerten des Abgleichparameters an das Ziel-Korrekturmodul (3), Empfangen von Leistungsdetektionsinformationen, die jedem Parameterwert in der dritten Gruppe von verschiedenen Parameterwerten entsprechen und die durch den Leistungsdetektor (1) gesendet wurden, und Bestimmen eines optimalen Parameterwerts des Gleichstromkompensationsparameters basierend auf den Leistungsdetektionsinformationen, die jedem Parameterwert entsprechen, wobei die dritte Gruppe von verschiedenen Parameterwerten eine Gruppe von verschiedenen Parameterwerten des Abgleichparameters ist, die aus einem voreingestellten Parameterwert des zweiten Kreuzübertragungsparameters, einem voreingestellten Parameterwert des ersten Gewinnsteuerparameters, einem voreingestellten Parameterwert des zweiten Gewinnsteuerparameters und verschiedenen Parameterwerten des Gleichstromkompensationsparameters besteht;
Senden einer vierten Gruppe von verschiedenen Parameterwerten des Abgleichparameters an das Ziel-Korrekturmodul (3), Empfangen von Leistungsdetektionsinformationen, die jedem Parameterwert in der vierten Gruppe von verschiedenen Parameterwerten entsprechen und die durch den Leistungsdetektor (1) gesendet wurden, und Bestimmen eines optimalen Parameterwerts des ersten Gewinnsteuerparameters und eines optimalen Parameterwerts des zweiten Kreuzübertragungsparameters basierend auf den Leistungsdetektionsinformationen, die jedem Parameterwert entsprechen, wobei die vierte Gruppe von verschiedenen Parameterwerten eine Gruppe von verschiedenen Parameterwerten des Abgleichparameters ist, die aus dem optimalen Parameterwert des Gleichstromkompensationsparameters, dem voreingestellten Parameterwert des zweiten Gewinnsteuerparameters, verschiedenen Parameterwerten des ersten Gewinnsteuerparameters und verschiedenen Parameterwerten des zweiten Kreuzübertragungsparameters besteht; und
Senden einer fünften Gruppe von verschiedenen Parameterwerten des Abgleichparameters an das Ziel-Korrekturmodul (3), Empfangen von Leistungsdetektionsinformationen, die jedem Parameterwert in der fünften Gruppe von verschiedenen Parameterwerten entsprechen und die durch den Leistungsdetektor (1) gesendet wurden, und Bestimmen eines optimalen Parameterwerts des ersten Gewinnsteuerparameters und eines optimalen Parameterwerts des zweiten Gewinnsteuerparameters basierend auf den Leistungsdetektionsinformationen, die jedem Parameterwert entsprechen, wobei die fünfte Gruppe von verschiedenen Parameterwerten eine Gruppe von verschiedenen Parameterwerten des Abgleichparameters ist, die aus dem optimalen Parameterwert des Gleichstromkompensationsparameters, den verschiedenen Parameterwerten des ersten Gewinnsteuerparameters, verschiedenen Parameterwerten des zweiten Gewinnsteuerparameters und den verschiedenen Parameterwerten des zweiten Kreuzübertragungsparameters besteht.

6. Mikrowellensender nach Anspruch 5, wobei der Controller (2) ausgelegt ist zum:

Abgleichen eines Parameterwerts des Gleichstromkompensationsparameters, startend von einem für den Gleichstromkompensationsparameter eingestellten ersten Anfangsparameterwert; Senden von Parameterwerten des Abgleichparameters an das Ziel-Korrekturmodul (3) nach jedem Abgleich, wobei aktuell gesendete Parameterwerte des Abgleichparameters einen für den ersten Gewinnsteuerparameter eingestellten zweiten Anfangsparameterwert, einen für den zweiten Gewinnsteuerparameter eingestellten vierten Anfangsparameterwert, einen für den zweiten Kreuzübertragungsparameter eingestellten dritten Anfangsparameterwert und einen aktuell abgeglichenen Parameterwert des Gleichstromkompensationsparameters umfassen; und Empfangen einer Gruppe von Leistungsdetektionsinformationen, die von dem Leistungsdetektor (1) gesendet wurden und den Parameterwerten des Abgleichparameters entsprechen, die nach jedem Abgleich erhalten werden, Berechnen eines Durchschnittswerts der Gruppe von Leistungsdetektionsinformationen und Bestimmen, dass ein Parameterwert, der von dem Gleichstromkompensationsparameter stammt und der einem minimalen Durchschnittswert entspricht, der optimale Parameterwert des Gleichstromkompensationsparameters ist;
Abgleichen eines Parameterwerts des ersten Gewinnsteuerparameters, startend von dem für den ersten Gewinnsteuerparameter eingestellten zweiten Anfangsparameterwert und eines Parameterwerts des zweiten Kreuzübertragungsparameters, startend von dem für den zweiten Kreuzübertragungsparameter eingestellten dritten Anfangsparameterwert; Senden von Parameterwerten des Abgleichparameters an das Ziel-Korrekturmodul (3) nach jedem Abgleich, wobei aktuell gesendete Parameterwerte des Abgleichparameters den optimalen Parameterwert des Gleichstromkompensationsparameters, den für den zweiten Gewinnsteuerparameter voreingestellten vierten Anfangsparameterwert, einen aktuell abgeglichenen Parameterwert des ersten Gewinnsteuerparameters und einen aktuell abgeglichenen Parameterwert des zweiten Kreuzübertragungsparameters umfassen; und Empfangen einer Gruppe von Leistungsdetektionsinformationen, die von dem Leistungsdetektor (1) gesendet wurden und den Parameterwerten des Abgleichparameters entsprechen, die nach jedem Abgleich erhalten werden, Berechnen einer statistischen Varianz der Gruppe von Leistungsdetektionsinformationen und Bestimmen, dass ein Parameterwert des ersten Gewinnsteuerparameters und ein Parameterwert des zweiten Kreuzübertragungsparameters, die einer minimalen statistischen Varianz entsprechen, jeweils der optimale Parameterwert des ersten Gewinnsteuerparameters und der optimale Parameterwert des zweiten Kreuzübertragungsparameters sind; und
Abgleichen eines Parameterwerts des zweiten Gewinnsteuerparameters, startend von dem für den zweiten Gewinnsteuerparameter eingestellten vierten Anfangsparameterwert, des Parameterwerts des ersten Gewinnsteuerparameters, startend von dem optimalen Parameterwert des ersten Gewinnsteuerparameters, und des Parameterwerts des zweiten Kreuzübertragungsparameters, startend von dem optimalen Parameterwert des zweiten Kreuzübertragungsparameters; Senden von Parameterwerten des Abgleichparameters an das Ziel-Korrekturmodul (3) nach jedem Abgleich, wobei aktuell gesendete Parameterwerte des Abgleichparameters den optimalen Parameterwert des Gleichstromkompensationsparameters, einen aktuell abgeglichenen Parameterwert des zweiten Gewinnsteuerparameters, den aktuell abgeglichenen Parameterwert des ersten Gewinnsteuerparameters und den aktuell abgeglichenen Parameterwert des zweiten Kreuzübertragungsparameters umfassen; und Empfangen einer Gruppe von Leistungsdetektionsinformationen, die von dem Leistungsdetektor (1) gesendet wurden und den Parameterwerten des Abgleichparameters entsprechen, die nach jedem Abgleich erhalten werden, Berechnen eines Durchschnittswerts der Gruppe von Leistungsdetektionsinformationen und Bestimmen, dass ein Quadrat eines Parameterwerts, der von dem zweiten Gewinnsteuerparameter stammt und der einem minimalen Durchschnittswert entspricht, der optimale Parameterwert des zweiten Gewinnsteuerparameters ist.

7. Mikrowellensender nach Anspruch 1, wobei der Balance-Abgleichparameter mindestens einen Gleichstromkompensationsparameter umfasst; und
der Controller (2) ausgelegt ist zum:

Abgleichen eines Parameterwerts des Gleichstromkompensationsparameters, startend von einem für den Gleichstromkompensationsparameter eingestellten ersten Anfangsparameterwert, Senden von Parameterwerten des Abgleichparameters an das Ziel-Korrekturmodul (3) nach jedem Abgleich, Empfangen einer Gruppe von Leistungsdetektionsinformationen, die von dem Leistungsdetektor (1) gesendet wurden und den Parameterwerten des Abgleichparameters entsprechen, die nach jedem Abgleich erhalten werden, Berechnen eines Durchschnittswerts der Gruppe von Leistungsdetektionsinformationen und Bestimmen, dass ein Parameterwert, der von dem Gleichstromkompensationsparameter stammt und der einem minimalen Durchschnittswert entspricht, ein optimaler Parameterwert des Gleichstromkompensationsparameters ist.

8. Mikrowellensender nach Anspruch 1, wobei der Mikrowellensender ferner einen Phasendetektor und mindestens ein Drehungskorrekturmodul umfasst; und ein Signalausgabeende von jedem Drehungskorrekturmodul (3) elektrisch mit einem Signaleingabeende von einem Korrekturmodul (3) verbunden ist, der Phasendetektor elektrisch mit einem Signalausgabeende von jedem Signalverarbeitungsmodul (4) verbunden ist und der Phasendetektor elektrisch mit einem Steuerende von jedem Drehungskorrekturmodul verbunden ist.

9. Signalabgleichverfahren, wobei das Verfahren auf einen Mikrowellensender angewandt wird, der Mikrowellensender einen Leistungsdetektor (1), einen Controller (2), mindestens zwei Korrekturmodule (3) und mindestens zwei Signalverarbeitungsmodule (4) umfasst, wobei ein Signaleingangsende von jedem Signalverarbeitungsmodul (4) elektrisch mit einem Signalausgangsende eines entsprechenden Korrekturmoduls (3) verbunden ist und der Controller (2) separat elektrisch mit einem Steuerende von jedem Korrekturmodul (3) und dem Leistungsdetektor (1) verbunden ist, wobei das Verfahren Folgendes umfasst:

a) Senden (310), durch den Controller (2), von verschiedenen Parameterwerten eines Abgleichparameters an ein Ziel-Korrekturmodul (3), Empfangen von Leistungsdetektionsinformationen, die jedem Parameterwert entsprechen und die durch den Leistungsdetektor (1) gesendet wurden, und Bestimmen eines optimalen Parameterwerts, der dem Ziel-Korrekturmodul (3) entspricht, aus den Parameterwerten, basierend auf den Leistungsdetektionsinformationen, die jedem Parameterwert entsprechen;
b) Senden (302), durch den Controller (2), des optimalen Parameterwerts an das Ziel-Korrekturmodul; und
c) Durchführen (303), durch das Ziel-Korrekturmodul (3), basierend auf dem optimalen Parameterwert, von Signalabgleich an einem eingegebenen I/Q-Signal, wobei
d) die empfangenen Leistungsdetektionsinformationen Leistungsdetektionsinformationen eines durch ein Ziel-Signalverarbeitungsmodul (4) ausgegebenen I/Q-Signals sind, wenn das Ziel-Korrekturmodul (3) Signalabgleich basierend auf jedem durch den Controller (2) gesendeten Parameterwert durchführt, wobei das Ziel-Signalverarbeitungsmodul (4) ein mit dem Ziel-Korrekturmodul (3) elektrisch verbundenes Signalverarbeitungsmodul (4) ist, der Abgleichparameter zumindest einen Balance-Abgleichparameter umfasst und das Ziel-Korrekturmodul (3) ein beliebiges der mindestens zwei Korrekturmodule ist.

10. Verfahren nach Anspruch 9, wobei, wenn der Controller (2) die verschiedenen Parameterwerte des Abgleichparameters an das Ziel-Korrekturmodul (3) sendet, falls ein anderes Korrekturmodul (3) einen entsprechenden optimalen Parameterwert erhalten hat und sich in einem Arbeitszustand des Durchführens, basierend auf dem optimalen Parameterwert, von Signalabgleich auf das I/Q-Signal befindet, der Abgleichparameter ferner einen ersten Kreuzübertragungsparameter umfasst; und das Empfangen, durch den Controller (2), von Leistungsdetektionsinformationen, die jedem Parameterwert entsprechen und die durch den Leistungsdetektor (1) gesendet wurden, und Bestimmen eines optimalen Parameterwerts, der dem Ziel-Korrekturmodul (3) entspricht, aus den Parameterwerten, basierend auf den Leistungsdetektionsinformationen, die jedem Parameterwert entsprechen, Folgendes umfasst: Empfangen, durch den Controller (2), von kombinierten Leistungsdetektionsinformationen, die jedem Parameterwert entsprechen und die durch den Leistungsdetektor (1) gesendet wurden, und Bestimmen des optimalen Parameterwerts aus den Parameterwerten basierend auf den kombinierten Leistungsdetektionsinformationen, die jedem der Parameterwerte entsprechen, wobei die jedem Parameterwert entsprechenden kombinierten Leistungsdetektionsinformationen Leistungsdetektionsinformationen sind, erhalten aus Leistungsdetektionsinformationen eines I/Q-Signals, Ausgegeben durch ein Signalverarbeitungsmodul (4), verbunden mit dem anderen Korrekturmodul (3), wenn das andere Korrekturmodul (3) basierend auf dem entsprechenden optimalen Parameterwert Signalabgleich durchführt, die zu Leistungsdetektionsinformationen eines I/Q-Signals hinzugefügt werden, Ausgegeben durch das Ziel-Signalverarbeitungsmodul (4), wenn das Ziel-Korrekturmodul (3) basierend auf jedem Parameterwert Signalabgleich durchführt.

11. Verfahren nach Anspruch 10, wobei der Balance-Abgleichparameter einen Gleichstromkompensationsparameter, einen Gewinnsteuerungsparameter und einen zweiten Kreuzübertragungsparameter umfasst.

**12.** Verfahren nach Anspruch 11, wobei das Senden, durch den Controller (2), von verschiedenen Parameterwerten eines Abgleichparameters an ein Ziel-Korrekturmodul (3), Empfangen von kombinierten Leistungsdetektionsinformationen, die jedem Parameterwert entsprechen und die durch den Leistungsdetektor (1) gesendet wurden, und Bestimmen des optimalen Parameterwerts aus den Parameterwerten, basierend auf den kombinierten Leistungsdetektionsinformationen, die jedem Parameterwert entsprechen, Folgendes umfasst:

Senden, durch den Controller (2), einer ersten Gruppe von verschiedenen Parameterwerten des Abgleichparameters an das Ziel-Korrekturmodul (3), Empfangen von kombinierten Leistungsdetektionsinformationen, die jedem Parameterwert in der ersten Gruppe von verschiedenen Parameterwerten entsprechen und die durch den Leistungsdetektor (1) gesendet wurden, und Bestimmen eines optimalen Parameterwerts des Gleichstromkompensationsparameters basierend auf den kombinierten Leistungsdetektionsinformationen, die jedem Parameterwert entsprechen, wobei die erste Gruppe von verschiedenen Parameterwerten eine Gruppe von verschiedenen Parameterwerten des Abgleichparameters ist, die einen voreingestellten Parameterwert des Gewinnsteuerparameters, einen voreingestellten Parameterwert des ersten Kreuzübertragungsparameters, einen voreingestellten Parameterwert des zweiten Kreuzübertragungsparameters und verschiedene Parameterwerte des Gleichstromkompensationsparameters umfasst; und
Senden, durch den Controller (2), einer zweiten Gruppe von verschiedenen Parameterwerten des Abgleichparameters an das Ziel-Korrekturmodul (3), Empfangen von kombinierten Leistungsdetektionsinformationen, die jedem Parameterwert in der zweiten Gruppe von verschiedenen Parameterwerten entsprechen und die durch den Leistungsdetektor (1) gesendet wurden, und Bestimmen eines optimalen Parameterwerts des Gewinnsteuerparameters, eines optimalen Parameterwerts des ersten Kreuzübertragungsparameters und eines optimalen Parameterwerts des zweiten Kreuzübertragungsparameters basierend auf den kombinierten Leistungsdetektionsinformationen, die jedem Parameterwert entsprechen, wobei die zweite Gruppe von verschiedenen Parameterwerten eine Gruppe von verschiedenen Parameterwerten des Abgleichparameters ist, die aus dem optimalen Parameterwert des Gleichstromkompensationsparameters, verschiedenen Parameterwerten des Gewinnsteuerparameters, verschiedenen Parameterwerten des ersten Kreuzübertragungsparameters, verschiedenen Parameterwerten des zweiten Kreuzübertragungsparameters besteht.

**13.** Verfahren nach Anspruch 12, wobei das Senden, durch den Controller (2), des optimalen Parameterwerts an das Ziel-Korrekturmodul (3) Folgendes umfasst: Senden, durch den Controller (2), des optimalen Parameterwerts des Gleichstromkompensationsparameters, des optimalen Parameterwerts des Gewinnsteuerparameters, des optimalen Parameterwerts des ersten Kreuzübertragungsparameters und des optimalen Parameterwerts des zweiten Kreuzübertragungsparameters an das Ziel-Korrekturmodul.

**14.** Verfahren nach Anspruch 13, wobei das Durchführen, durch das Ziel-Korrekturmodul (3) basierend auf dem optimalen Parameterwert, von Signalabgleich an einem eingegebenen I/Q-Signal Folgendes umfasst:
Durchführen, durch das Ziel-Korrekturmodul (3) basierend auf dem optimalen Parameterwert des Gleichstromkompensationsparameters, dem optimalen Parameterwert des Gewinnsteuerparameters, dem optimalen Parameterwert des ersten Kreuzübertragungsparameters und dem optimalen Parameterwert des zweiten Kreuzübertragungsparameters, von Signalabgleich an dem eingegebenen I/Q-Signal.

**15.** Verfahren nach Anspruch 9, wobei der Balance-Abgleichparameter einen Gleichstromkompensationsparameter, einen Gewinnsteuerparameter und einen zweiten Kreuzübertragungsparameter umfasst und der Gewinnsteuerparameter einen ersten Gewinnsteuerparameter und einen zweiten Gewinnsteuerparameter umfasst; wenn der Controller (2) die verschiedenen Parameterwerte des Abgleichparameters an das Ziel-Korrekturmodul (3) sendet, falls kein anderes Korrekturmodul (3) einen entsprechenden optimalen Parameterwert erhalten hat, das Senden, durch den Controller (2), von verschiedenen Parameterwerten eines Abgleichparameters an ein Ziel-Korrekturmodul (3), Empfangen von Leistungsdetektionsinformationen, die jedem Parameterwert entsprechen und die durch den Leistungsdetektor (1) gesendet wurden, und Bestimmen eines optimalen Parameterwerts, der dem Ziel-Korrekturmodul (3) entspricht, aus den Parameterwerten, basierend auf den Leistungsdetektionsinformationen, die jedem Parameterwert entsprechen, Folgendes umfasst:

Senden einer dritten Gruppe von verschiedenen Parameterwerten des Abgleichparameters an das Ziel-Korrekturmodul (3), Empfangen von Leistungsdetektionsinformationen, die jedem Parameterwert in der dritten Gruppe von verschiedenen Parameterwerten entsprechen und die durch den Leistungsdetektor (1) gesendet wurden, und Bestimmen eines optimalen Parameterwerts des Gleichstromkompensationsparameters basierend auf den Leistungsdetektionsinformationen, die jedem Parameterwert entsprechen, wobei die dritte Gruppe von verschiedenen Parameterwerten eine Gruppe von verschiedenen Parameterwerten des Abgleichparameters ist, die aus einem voreingestellten Parameterwert des zweiten Kreuzübertragungsparameters, einem voreingestellten Parameterwert des ersten Gewinnsteuerparameters, einem voreingestellten Parameterwert des zweiten Gewinnsteuerparameters und verschiedenen Parameterwerten des Gleichstromkompensationsparameters besteht;

Senden einer vierten Gruppe von verschiedenen Parameterwerten des Abgleichparameters an das Ziel-Korrekturmodul (3), Empfangen von Leistungsdetektionsinformationen, die jedem Parameterwert in der vierten Gruppe von verschiedenen Parameterwerten entsprechen und die durch den Leistungsdetektor (1) gesendet wurden, und Bestimmen eines optimalen Parameterwerts des ersten Gewinnsteuerparameters und eines optimalen Parameterwerts des zweiten Kreuzübertragungsparameters basierend auf den Leistungsdetektionsinformationen, die jedem Parameterwert entsprechen, wobei die vierte Gruppe von verschiedenen Parameterwerten eine Gruppe von verschiedenen Parameterwerten des Abgleichparameters ist, die aus dem optimalen Parameterwert des Gleichstromkompensationsparameters, dem voreingestellten Parameterwert des zweiten Gewinnsteuerparameters, verschiedenen Parameterwerten des ersten Gewinnsteuerparameters und verschiedenen Parameterwerten des zweiten Kreuzübertragungsparameters besteht; und

Senden einer fünften Gruppe von verschiedenen Parameterwerten des Abgleichparameters an das Ziel-Korrekturmodul (3), Empfangen von Leistungsdetektionsinformationen, die jedem Parameterwert in der fünften Gruppe von verschiedenen Parameterwerten entsprechen und die durch den Leistungsdetektor (1) gesendet wurden, und Bestimmen eines optimalen Parameterwerts des zweiten Gewinnsteuerparameters basierend auf den Leistungsdetektionsinformationen, die jedem Parameterwert entsprechen, wobei die fünfte Gruppe von verschiedenen Parameterwerten eine Gruppe von verschiedenen Parameterwerten des Abgleichparameters ist, die aus dem optimalen Parameterwert des Gleichstromkompensationsparameters, den verschiedenen Parameterwerten des ersten Gewinnsteuerparameters, verschiedenen Parameterwerten des zweiten Gewinnsteuerparameters und den verschiedenen Parameterwerten des zweiten Kreuzübertragungsparameters besteht; und

das Senden, durch den Controller (2), des optimalen Parameterwerts an das Ziel-Korrekturmodul (3) Folgendes umfasst:

Senden, durch den Controller (2), des optimalen Parameterwerts des Gleichstromkompensationsparameters, des optimalen Parameterwerts des Gewinnsteuerparameters, des optimalen Parameterwerts des ersten Kreuzübertragungsparameters und des optimalen Parameterwerts des zweiten Kreuzübertragungsparameters an das Ziel-Korrekturmodul; und

das Durchführen, durch das Ziel-Korrekturmodul (3) basierend auf dem optimalen Parameterwert, von Signalabgleich an einem I/Q-Signal Folgendes umfasst:

Durchführen, durch das Ziel-Korrekturmodul (3) basierend auf dem optimalen Parameterwert des Gleichstromkompensationsparameters, den optimalen Parameterwerten der Gewinnsteuerparameter und dem optimalen Parameterwert des ersten Kreuzübertragungsparameters und dem optimalen Parameterwert des zweiten Kreuzübertragungsparameters, von Signalabgleich an dem eingegebenen I/Q-Signal.

## Revendications

1. Émetteur hyperfréquence, l'émetteur hyperfréquence comprenant un détecteur de puissance (1), un contrôleur (2), au moins deux modules de correction (3) et au moins deux modules de traitement de signal (4), dans lequel

a) une extrémité d'entrée de signal de chaque module de traitement de signal (4) est reliée électriquement à une extrémité de sortie de signal d'un module de correction (3) correspondant, et le contrôleur (2) est relié électriquement séparément à une extrémité de commande de chaque module de correction (3) et au détecteur de puissance (1) ;

b) le détecteur de puissance (1) est configuré pour : détecter une sortie de signal en phase/quadrature, I/Q, émis par un desdits au moins deux modules de traitement de signal (4), pour obtenir des informations de détection de puissance, et envoyer les informations de détection de puissance du signal I/Q au contrôleur (2) ;

c) le contrôleur (2) est configuré pour : envoyer différentes valeurs de paramètre d'un paramètre de réglage à un module de correction cible (3), recevoir des informations de détection de puissance qui correspondent à chaque valeur de paramètre et qui sont envoyées par le détecteur de puissance (1), déterminer une valeur de paramètre optimale correspondant au module de correction cible (3) à partir des valeurs de paramètre d'après les informations de détection de puissance correspondant à chaque valeur de paramètre, et envoyer la valeur de paramètre optimale au module de correction cible ; et

d) le module de correction cible (3) est configuré pour : effectuer, d'après les valeurs de paramètre du paramètre de réglage qui sont envoyées par le contrôleur (2), un réglage de signal sur un signal I/Q d'entrée, et envoyer le signal I/Q réglé à un module de traitement de signal cible (4) relié au module de correction cible (3), les informations de détection de puissance reçues étant des informations de détection de puissance d'un signal I/Q émis par le module de traitement de signal cible (4) lorsque le module de correction cible (3) effectue un réglage de signal d'après chaque valeur de paramètre envoyée par le contrôleur (2), le module de traitement de signal cible (4) étant un module de traitement de signal (4) relié électriquement au module de correction cible (3), le paramètre de réglage comprenant au moins un paramètre de réglage d'équilibre, et le module de correction cible (3) étant n'importe lequel desdits au moins deux modules de correction.

2. Émetteur hyperfréquence selon la revendication 1, dans lequel, lorsque le contrôleur (2) envoie les différentes valeurs de paramètre du paramètre de réglage au module de correction cible (3), si un autre module de correction (3) a obtenu une valeur de paramètre optimale correspondante et se trouve dans un état de fonctionnement lui permettant d'effectuer, d'après la valeur de paramètre optimale, un réglage de signal sur le signal I/Q d'entrée, le paramètre de réglage comprend également un premier paramètre de transfert croisé ; et

le contrôleur (2) est configuré pour : envoyer les différentes valeurs de paramètre du paramètre de réglage au module de correction cible (3), recevoir des informations de détection de puissance combinées qui correspondent à chaque valeur de paramètre et qui sont envoyées par le détecteur de puissance (1), déterminer la valeur de paramètre optimale à partir des valeurs de paramètre d'après les informations de détection de puissance combinées correspondant à chaque valeur de paramètre, et envoyer la valeur de paramètre optimale au module de correction cible (3), les informations de détection de puissance combinées qui correspondent à chaque valeur de paramètre étant des informations de détection de puissance obtenues après que des informations de détection de puissance d'un signal I/Q émis, lorsque ledit autre module de correction (3) effectue un réglage de signal d'après la valeur de paramètre optimale correspondante, par un module de traitement de signal (4) relié audit autre module de correction (3) ont été ajoutées aux informations de détection de puissance d'un signal I/Q émis par le module de traitement de signal cible (4) lorsque le module de correction cible (3) effectue un réglage de signal d'après chaque valeur de paramètre.

3. Émetteur hyperfréquence selon la revendication 2, dans lequel le paramètre de réglage d'équilibre comprend un paramètre de compensation de courant continu, un paramètre de commande de gain et un deuxième paramètre de transfert croisé.

4. Émetteur hyperfréquence selon la revendication 3, dans lequel le contrôleur (2) est configuré pour :

envoyer un premier groupe de différentes valeurs de paramètre du paramètre de réglage au module de correction cible (3), recevoir des informations de détection de puissance combinées qui correspondent à chaque valeur de paramètre du premier groupe de différentes valeurs de paramètre et qui sont envoyées par le détecteur de puissance (1), et déterminer une valeur de paramètre optimale du paramètre de compensation de courant continu d'après les informations de détection de puissance combinées correspondant à chaque valeur de paramètre, le premier groupe de différentes valeurs de paramètre étant un groupe de différentes valeurs de paramètre du paramètre de réglage qui comprend une valeur de paramètre prédéfinie du paramètre de commande de gain, une valeur de paramètre prédéfinie du premier paramètre de transfert croisé, une valeur de paramètre prédéfinie du deuxième paramètre de transfert croisé, et différentes valeurs de paramètre du paramètre de compensation de courant continu ;

envoyer un deuxième groupe de différentes valeurs de paramètre du paramètre de réglage au module de correction cible (3), recevoir des informations de détection de puissance combinées qui correspondent à chaque valeur de paramètre du deuxième groupe de différentes valeurs de paramètre et qui sont envoyées par le détecteur de puissance (1), et déterminer une valeur de paramètre optimale du paramètre de commande de gain, une valeur de paramètre optimale du premier paramètre de transfert croisé, et une valeur de paramètre optimale du deuxième paramètre de transfert croisé d'après les informations de détection de puissance combinées correspondant à chaque valeur de paramètre, le deuxième groupe de différentes valeurs de paramètre étant un groupe de différentes valeurs de paramètre du paramètre de réglage qui consistent en la valeur de paramètre optimale du paramètre de compensation de courant continu, en différentes valeurs de paramètre du paramètre de commande de gain, en différentes valeurs de paramètre du premier paramètre de transfert croisé et en différentes valeurs de paramètre du deuxième paramètre de transfert croisé ; et

envoyer la valeur de paramètre optimale du paramètre de compensation de courant continu, la valeur de paramètre optimale du premier paramètre de transfert croisé et la valeur de paramètre optimale du deuxième paramètre de transfert croisé au module de correction cible.

**5.** Émetteur hyperfréquence selon la revendication 1, dans lequel le paramètre de réglage d'équilibre comprend un paramètre de compensation de courant continu, un paramètre de commande de gain et un deuxième paramètre de transfert croisé, et le paramètre de commande de gain comprend un premier paramètre de commande de gain et un deuxième paramètre de commande de gain ;

lorsque le contrôleur (2) envoie les différentes valeurs de paramètre du paramètre de réglage au module de correction cible (3), si aucun autre module de correction (3) n'a obtenu une valeur de paramètre optimale correspondante, le contrôleur (2) est configuré pour :

envoyer un troisième groupe de différentes valeurs de paramètre du paramètre de réglage au module de correction cible (3), recevoir des informations de détection de puissance qui correspondent à chaque valeur de paramètre du troisième groupe de différentes valeurs de paramètre et qui sont envoyées par le détecteur de puissance (1), et déterminer une valeur de paramètre optimale du paramètre de compensation de courant continu d'après les informations de détection de puissance correspondant à chaque valeur de paramètre, le troisième groupe de différentes valeurs de paramètre étant un groupe de différentes valeurs de paramètre du paramètre de réglage qui consistent en une valeur de paramètre prédéfinie du deuxième paramètre de transfert croisé, en une valeur de paramètre prédéfinie du premier paramètre de commande de gain, en une valeur de paramètre prédéfinie du deuxième paramètre de commande de gain, et en différentes valeurs de paramètre du paramètre de compensation de courant continu ;

envoyer un quatrième groupe de différentes valeurs de paramètre du paramètre de réglage au module de correction cible (3), recevoir des informations de détection de puissance qui correspondent à chaque valeur de paramètre du quatrième groupe de différentes valeurs de paramètre et qui sont envoyées par le détecteur de puissance (1), et déterminer une valeur de paramètre optimale du premier paramètre de commande de gain et une valeur de paramètre optimale du deuxième paramètre de transfert croisé d'après les informations de détection de puissance correspondant à chaque valeur de paramètre, le quatrième groupe de différentes valeurs de paramètre étant un groupe de différentes valeurs de paramètre du paramètre de réglage qui consistent en la valeur de paramètre optimale du paramètre de compensation de courant continu, en la valeur de paramètre prédéfinie du deuxième paramètre de commande de gain, en différentes valeurs de paramètre du premier paramètre de commande de gain, et en différentes valeurs de paramètre du deuxième paramètre de transfert croisé ; et

envoyer un cinquième groupe de différentes valeurs de paramètre du paramètre de réglage au module de correction cible (3), recevoir des informations de détection de puissance qui correspondent à chaque valeur de paramètre du cinquième groupe de différentes valeurs de paramètre et qui sont envoyées par le détecteur de puissance (1), et déterminer une valeur de paramètre optimale du deuxième paramètre de commande de gain d'après les informations de détection de puissance correspondant à chaque valeur de paramètre, le cinquième groupe de différentes valeurs de paramètre étant un groupe de différentes valeurs de paramètre du paramètre de réglage qui consistent en la valeur de paramètre optimale du paramètre de compensation de courant continu, en les différentes valeurs de paramètre du premier paramètre de commande de gain, en différentes valeurs de paramètre du deuxième paramètre de commande de gain, et en les différentes valeurs de paramètre du deuxième paramètre de transfert croisé.

**6.** Émetteur hyperfréquence selon la revendication 5, dans lequel le contrôleur (2) est configuré pour :

régler une valeur de paramètre du paramètre de compensation de courant continu en commençant par une première valeur de paramètre initiale prédéfinie pour le paramètre de compensation de courant continu ; envoyer des valeurs de paramètre du paramètre de réglage au module de correction cible (3) après chaque réglage, les valeurs de paramètre actuellement envoyées pour le paramètre de réglage comprenant une deuxième valeur de paramètre initiale prédéfinie pour le premier paramètre de commande de gain, une quatrième valeur de paramètre initiale prédéfinie pour le deuxième paramètre de commande de gain, une troisième valeur de paramètre initiale prédéfinie pour le deuxième paramètre de transfert croisé, et une valeur de paramètre actuellement réglée du paramètre de compensation de courant continu ; et recevoir un groupe d'informations de détection de puissance envoyées par le détecteur de puissance (1) et correspondant aux valeurs de paramètre du paramètre de réglage qui sont obtenues après chaque réglage, calculer une valeur moyenne du groupe d'informations de détection de puissance, et déterminer qu'une valeur de paramètre qui est celle du paramètre de compensation de courant continu et qui correspond à une valeur moyenne minimale est la valeur de paramètre optimale du paramètre de compensation de courant continu ;

régler une valeur de paramètre du premier paramètre de commande de gain en commençant par la deuxième valeur de paramètre initiale prédéfinie pour le premier paramètre de commande de gain et une valeur de paramètre du deuxième paramètre de transfert croisé en commençant par la troisième valeur de paramètre initiale prédéfinie pour le deuxième paramètre de transfert croisé ; envoyer des valeurs de paramètre du paramètre de réglage au module de correction cible (3) après chaque réglage, les valeurs de paramètre actuellement envoyées pour le paramètre de réglage comprenant la valeur de paramètre optimale du paramètre de compensation de courant continu, la quatrième valeur de paramètre initiale prédéfinie pour le deuxième paramètre de commande de gain, une valeur de paramètre actuellement réglée du premier paramètre de commande de gain, et une valeur de paramètre actuellement réglée du deuxième paramètre de transfert croisé ; et recevoir un groupe d'informations de détection de puissance envoyées par le détecteur de puissance (1) et correspondant aux valeurs de paramètre du paramètre de réglage qui sont obtenues après chaque réglage, calculer une variance statistique du groupe d'informations de détection de puissance, et déterminer qu'une valeur de paramètre du premier paramètre de commande de gain et qu'une valeur de paramètre du deuxième paramètre de transfert croisé qui correspondent à une variance statistique minimale sont respectivement la valeur de paramètre optimale du premier paramètre de commande de gain et la valeur de paramètre optimale du deuxième paramètre de transfert croisé ; et

régler une valeur de paramètre du deuxième paramètre de commande de gain en commençant par la quatrième valeur de paramètre initiale prédéfinie pour le deuxième paramètre de commande de gain, la valeur de paramètre du premier paramètre de commande de gain en commençant par la valeur de paramètre optimale du premier paramètre de commande de gain, et la valeur de paramètre du deuxième paramètre de transfert croisé en commençant par la valeur de paramètre optimale du deuxième paramètre de transfert croisé ; envoyer des valeurs de paramètre du paramètre de réglage au module de correction cible (3) après chaque réglage, les valeurs de paramètre actuellement envoyées pour le paramètre de réglage comprenant la valeur de paramètre optimale du paramètre de compensation de courant continu, une valeur de paramètre actuellement réglée du deuxième paramètre de commande de gain, la valeur de paramètre actuellement réglée du premier paramètre de commande de gain, et la valeur de paramètre actuellement réglée du deuxième paramètre de transfert croisé ; et recevoir un groupe d'informations de détection de puissance envoyées par le détecteur de puissance (1) et correspondant aux valeurs de paramètre du paramètre de réglage qui sont obtenues après chaque réglage, calculer une valeur moyenne du groupe d'informations de détection de puissance, et déterminer qu'un carré d'une valeur de paramètre qui est celle du deuxième paramètre de commande de gain et qui correspond à une valeur moyenne minimale est la valeur de paramètre optimale du deuxième paramètre de commande de gain.

**7.** Émetteur hyperfréquence selon la revendication 1, dans lequel le paramètre de réglage d'équilibre comprend au moins un paramètre de compensation de courant continu ; et
le contrôleur (2) est configuré pour :
régler une valeur de paramètre du paramètre de compensation de courant continu en commençant par une première valeur de paramètre initiale prédéfinie pour le paramètre de compensation de courant continu, envoyer des valeurs de paramètre du paramètre de réglage au module de correction cible (3) après chaque réglage, recevoir un groupe d'informations de détection de puissance envoyées par le détecteur de puissance (1) et correspondant aux valeurs de paramètre du paramètre de réglage qui sont obtenues après chaque réglage, calculer une valeur moyenne du groupe d'informations de détection de puissance, et déterminer qu'une valeur de paramètre qui est celle du paramètre de compensation de courant continu et qui correspond à une valeur moyenne minimale est une valeur de paramètre optimale du paramètre de compensation de courant continu.

**8.** Émetteur hyperfréquence selon la revendication 1, l'émetteur hyperfréquence comprenant également un détecteur de phase et au moins un module de correction de rotation ; et dans lequel
une extrémité de sortie de signal de chaque module de correction de rotation (3) est relié électriquement à une extrémité d'entrée de signal d'un module de correction (3), le détecteur de phase est relié électriquement à une extrémité de sortie de signal de chaque module de traitement de signal (4), et le détecteur de phase est relié électriquement à une extrémité de commande de chaque module de correction de rotation.

**9.** Procédé de réglage de signal, le procédé étant appliqué à un émetteur hyperfréquence, l'émetteur hyperfréquence comprenant un détecteur de puissance (1), un contrôleur (2), au moins deux modules de correction (3) et au moins deux modules de traitement de signal (4), une extrémité d'entrée de signal de chaque module de traitement de signal (4) étant reliée électriquement à une extrémité de sortie de signal d'un module de correction (3) correspondant, le contrôleur (2) étant relié électriquement séparément à une extrémité de commande de chaque module de correction (3) et au détecteur de puissance (1), et le procédé comprenant les étapes suivantes :

a) envoyer (310), par le contrôleur (2), différentes valeurs de paramètre d'un paramètre de réglage à un module de correction cible (3), recevoir des informations de détection de puissance qui correspondent à chaque valeur de paramètre et qui sont envoyées par le détecteur de puissance (1), et déterminer une valeur de paramètre optimale correspondant au module de correction cible (3) à partir des valeurs de paramètre d'après les informations de détection de puissance correspondant à chaque valeur de paramètre ;

b) envoyer (302), par le contrôleur (2), la valeur de paramètre optimale au module de correction cible ; et

c) effectuer (303), par le module de correction cible (3) d'après la valeur de paramètre optimale, un réglage de signal sur un signal en phase/quadrature, I/Q, d'entrée,

d) les informations de détection de puissance reçues étant des informations de détection de puissance d'un signal I/Q émis par un module de traitement de signal cible (4) lorsque le module de correction cible (3) effectue un réglage de signal d'après chaque valeur de paramètre envoyée par le contrôleur (2), le module de traitement de signal cible (4) étant un module de traitement de signal (4) relié électriquement au module de correction cible (3), le paramètre de réglage comprenant au moins un paramètre de réglage d'équilibre, et le module de correction cible (3) étant n'importe lequel desdits au moins deux modules de correction.

10. Procédé selon la revendication 9, dans lequel, lorsque le contrôleur (2) envoie les différentes valeurs de paramètre du paramètre de réglage au module de correction cible (3), si un autre module de correction (3) a obtenu une valeur de paramètre optimale correspondante et se trouve dans un état de fonctionnement lui permettant d'effectuer, d'après la valeur de paramètre optimale, un réglage de signal sur le signal I/Q d'entrée, le paramètre de réglage comprend également un premier paramètre de transfert croisé ; et

la réception, par le contrôleur (2), d'informations de détection de puissance qui correspondent à chaque valeur de paramètre et qui sont envoyées par le détecteur de puissance (1), et la détermination d'une valeur de paramètre optimale correspondant au module de correction cible (3) à partir des valeurs de paramètre d'après les informations de détection de puissance combinées qui correspondent à chaque valeur de paramètre, comprend les étapes consistant à :

recevoir, par le contrôleur (2), des informations de détection de puissance combinées qui correspondent à chaque valeur de paramètre et qui sont envoyées par le détecteur de puissance (1), et déterminer la valeur de paramètre optimale à partir des valeurs de paramètre d'après les informations de détection de puissance combinées correspondant à chaque valeur de paramètre, les informations de détection de puissance combinées qui correspondent à chaque valeur de paramètre étant des informations de détection de puissance obtenues après que des informations de détection de puissance d'un signal I/Q émis, lorsque ledit autre module de correction (3) effectue un réglage de signal d'après la valeur de paramètre optimale correspondante, par un module de traitement de signal (4) relié audit autre module de correction (3) ont été ajoutées aux informations de détection de puissance d'un signal I/Q émis par le module de traitement de signal cible (4) lorsque le module de correction cible (3) effectue un réglage de signal d'après chaque valeur de paramètre.

11. Procédé selon la revendication 10, dans lequel le paramètre de réglage d'équilibre comprend un paramètre de compensation de courant continu, un paramètre de commande de gain et un deuxième paramètre de transfert croisé.

12. Procédé selon la revendication 11, dans lequel l'envoi, par le contrôleur (2), de différentes valeurs de paramètre d'un paramètre de réglage à un module de correction cible (3), la réception d'informations de détection de puissance combinées qui correspondent à chaque valeur de paramètre et qui sont envoyées par le détecteur de puissance (1), et la détermination de la valeur de paramètre optimale à partir des valeurs de paramètre d'après les informations de détection de puissance combinées correspondant à chaque valeur de paramètre comprennent les étapes consistant à :

envoyer, par le contrôleur (2), un premier groupe de différentes valeurs de paramètre du paramètre de réglage au module de correction cible (3), recevoir des informations de détection de puissance combinées qui correspondent à chaque valeur de paramètre du premier groupe de différentes valeurs de paramètre et qui sont envoyées par le détecteur de puissance (1), et déterminer une valeur de paramètre optimale du paramètre de compensation de courant continu d'après les informations de détection de puissance combinées correspondant à chaque valeur de paramètre, le premier groupe de différentes valeurs de paramètre étant un groupe de différentes valeurs de paramètre du paramètre de réglage qui consistent en une valeur de paramètre prédéfinie du paramètre de commande de gain, en une valeur de paramètre prédéfinie du premier paramètre de transfert croisé, en une valeur de paramètre prédéfinie du deuxième paramètre de transfert croisé, et en différentes valeurs de paramètre du paramètre de compensation de courant continu ; et

envoyer, par le contrôleur (2), un deuxième groupe de différentes valeurs de paramètre du paramètre de réglage au module de correction cible (3), recevoir des informations de détection de puissance combinées qui correspondent à chaque valeur de paramètre du deuxième groupe de différentes valeurs de paramètre et qui sont envoyées par le détecteur de puissance (1), et déterminer une valeur de paramètre optimale du paramètre de commande de gain, une valeur de paramètre optimale du premier paramètre de transfert croisé, et une valeur de paramètre optimale du deuxième paramètre de transfert croisé d'après les informations de détection de puissance combinées correspondant à chaque valeur de paramètre, le deuxième groupe de différentes valeurs de paramètre étant un groupe de différentes valeurs de paramètre du paramètre de réglage qui consistent en la valeur de paramètre optimale du paramètre de compensation de courant continu, en différentes valeurs de paramètre du paramètre de commande de gain, en différentes valeurs de paramètre du premier paramètre de transfert croisé et en différentes valeurs de paramètre du deuxième paramètre de transfert croisé.

13. Procédé selon la revendication 12, dans lequel l'envoi, par le contrôleur (2), de la valeur de paramètre optimale au module de correction cible (3) comprend l'étape consistant à :
envoyer, par le contrôleur (2), la valeur de paramètre optimale du paramètre de compensation de courant continu, la valeur de paramètre optimale du paramètre de commande de gain, la valeur de paramètre optimale du premier paramètre de transfert croisé et la valeur de paramètre optimale du deuxième paramètre de transfert croisé au module de correction cible.

14. Procédé selon la revendication 13, dans lequel l'exécution, par le module de correction cible (3) d'après la valeur de paramètre optimale, d'un réglage de signal sur un signal I/Q d'entrée comprend l'étape consistant à :
effectuer, par le module de correction cible (3) d'après la valeur de paramètre optimale du paramètre de compensation de courant continu, la valeur de paramètre optimale du paramètre de commande de gain, la valeur de paramètre optimale du premier paramètre de transfert croisé et la valeur de paramètre optimale du deuxième paramètre de transfert croisé, un réglage de signal sur le signal I/Q d'entrée.

15. Procédé selon la revendication 9, dans lequel le paramètre de réglage d'équilibre comprend un paramètre de compensation de courant continu, un paramètre de commande de gain et un deuxième paramètre de transfert croisé, et le paramètre de commande de gain comprend un premier paramètre de commande de gain et un deuxième paramètre de commande de gain ;
lorsque le contrôleur (2) envoie les différentes valeurs de paramètre du paramètre de réglage au module de correction cible (3), si aucun autre module de correction (3) n'a obtenu une valeur de paramètre optimale correspondante, l'envoi, par le contrôleur (2), de différentes valeurs de paramètre d'un paramètre de réglage à un module de correction cible (3), la réception d'informations de détection de puissance qui correspondent à chaque valeur de paramètre et qui sont envoyées par le détecteur de puissance (1), et la détermination d'une valeur de paramètre optimale correspondant au module de correction cible (3) à partir des valeurs de paramètre d'après les informations de détection de puissance correspondant à chaque valeur de paramètre comprennent les étapes consistant à :

envoyer un troisième groupe de différentes valeurs de paramètre du paramètre de réglage au module de correction cible (3), recevoir des informations de détection de puissance qui correspondent à chaque valeur de paramètre du troisième groupe de différentes valeurs de paramètre et qui sont envoyées par le détecteur de puissance (1), et déterminer une valeur de paramètre optimale du paramètre de compensation de courant continu d'après les informations de détection de puissance correspondant à chaque valeur de paramètre, le troisième groupe de différentes valeurs de paramètre étant un groupe de différentes valeurs de paramètre du paramètre de réglage qui consistent en une valeur de paramètre prédéfinie du deuxième paramètre de transfert croisé, en une valeur de paramètre prédéfinie du premier paramètre de commande de gain, en une valeur de paramètre prédéfinie du deuxième paramètre de commande de gain, et en différentes valeurs de paramètre du paramètre de compensation de courant continu ;
envoyer un quatrième groupe de différentes valeurs de paramètre du paramètre de réglage au module de correction cible (3), recevoir des informations de détection de puissance qui correspondent à chaque valeur de paramètre du quatrième groupe de différentes valeurs de paramètre et qui sont envoyées par le détecteur de puissance (1), et déterminer une valeur de paramètre optimale du premier paramètre de commande de gain et une valeur de paramètre optimale du deuxième paramètre de transfert croisé d'après les informations de détection de puissance correspondant à chaque valeur de paramètre, le quatrième groupe de différentes valeurs de paramètre étant un groupe de différentes valeurs de paramètre du paramètre de réglage qui consistent en la valeur de paramètre optimale du paramètre de compensation de courant continu, en la valeur de paramètre prédéfinie du deuxième paramètre de commande de gain, en différentes valeurs de paramètre du premier paramètre de commande de gain, et en différentes valeurs de paramètre du deuxième paramètre de transfert croisé ; et
envoyer un cinquième groupe de différentes valeurs de paramètre du paramètre de réglage au module de correction cible (3), recevoir des informations de détection de puissance qui correspondent à chaque valeur de paramètre du cinquième groupe de différentes valeurs de paramètre et qui sont envoyées par le détecteur de puissance (1), et déterminer une valeur de paramètre optimale du deuxième paramètre de commande de gain d'après les informations de détection de puissance correspondant à chaque valeur de paramètre, le cinquième groupe de différentes valeurs de paramètre étant un groupe de différentes valeurs de paramètre du paramètre de réglage qui consistent en la valeur de paramètre optimale du paramètre de compensation de courant continu, en les différentes valeurs de paramètre du premier paramètre de commande de gain, en différentes valeurs de paramètre du deuxième paramètre de commande de gain, et en les différentes valeurs de paramètre du deuxième paramètre de transfert croisé ; et

l'envoi, par le contrôleur (2), de la valeur de paramètre optimale au module de correction cible (3) comprend l'étape consistant à :

> envoyer, par le contrôleur (2), la valeur de paramètre optimale du paramètre de compensation de courant continu, les valeurs de paramètre optimales des paramètres de commande de gain, et la valeur de paramètre optimale du deuxième paramètre de transfert croisé au module de correction cible ; et
> l'exécution, par le module de correction cible (3) d'après la valeur de paramètre optimale, d'un réglage de signal sur un signal I/Q d'entrée comprend l'étape consistant à :
> effectuer, par le module de correction cible (3) d'après la valeur de paramètre optimale du paramètre de compensation de courant continu, les valeurs de paramètre optimales des paramètres de commande de gain, et la valeur de paramètre optimale du deuxième paramètre de transfert croisé, un réglage de signal sur le signal I/Q d'entrée.

FIG. 1

FIG. 2

A controller sends different parameter values of an adjustment parameter to a target correction module, receives power detection information that is corresponding to each parameter value and that is sent by a power detector, and determines an optimal parameter value corresponding to the target correction module from the parameter values based on the power detection information corresponding to each parameter value

301

The controller sends the optimal parameter value to the target correction module

302

The target correction module performs, based on the optimal parameter value, signal adjustment on an I/Q signal that is input

303

FIG. 3

Correction module

FIG. 4

Correction module

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004032913 A1
- US 7382833 B1

- CN 102437983 A